(19) Europäisches Patentamt
European Patent Office
Office européen des brevets

(11) **EP 0 831 966 B1**

(12) **FASCICULE DE BREVET EUROPEEN**

(45) Date de publication et mention
de la délivrance du brevet:
**07.11.2001 Bulletin 2001/45**

(51) Int Cl.$^7$: **B01J 23/56**, B01J 23/62,
B01J 23/64, B01J 37/10

(21) Numéro de dépôt: **96922931.9**

(22) Date de dépôt: **14.06.1996**

(86) Numéro de dépôt international:
**PCT/FR96/00918**

(87) Numéro de publication internationale:
**WO 97/00130 (03.01.1997 Gazette 1997/02)**

(54) **CATALYSEURS UTILISABLES DANS LES REACTIONS DE TRANSFORMATION D'HYDROCARBURES ET CONTENANT DU SILICIUM**

SILIZIUM ENTHALTENDE KATALYSATOREN ZUR VERWENDUNG FÜR DIE UMWANDLUNG VON REAKTIONEN VON KOHLENWASSERSTOFFEN

SILICON-CONTAINING CATALYSTS FOR USE IN HYDROCARBON CONVERSION REACTIONS

(84) Etats contractants désignés:
**BE DE ES GB IT NL**

(30) Priorité: **16.06.1995 FR 9507183**
**16.06.1995 FR 9507185**
**16.06.1995 FR 9507184**
**16.06.1995 FR 9507181**
**16.06.1995 FR 9507187**
**16.06.1995 FR 9507191**
**16.06.1995 FR 9507190**

(43) Date de publication de la demande:
**01.04.1998 Bulletin 1998/14**

(73) Titulaire: **INSTITUT FRANCAIS DU PETROLE**
**92506 Rueil Malmaison Cédex (FR)**

(72) Inventeurs:
• **ALARIO, Fabio**
**F-92200 Neuilly-sur-Seine (FR)**
• **DEVES, Jean-Marie**
**F-78400 Chatou (FR)**
• **EUZEN, Patrick**
**F-92500 Rueil-Malmaison (FR)**

(74) Mandataire: **Des Termes, Monique et al**
**BREVALEX**
**3, rue du Docteur Lancereaux**
**75008 Paris (FR)**

(56) Documents cités:
**EP-A- 0 514 229**      **EP-A- 0 661 095**
**FR-A- 2 286 187**      **US-A- 3 736 252**
**US-A- 3 943 070**      **US-A- 4 070 413**
**US-A- 4 087 352**      **US-A- 4 780 447**
**US-A- 4 963 249**

**Description**

L'invention a pour objet des catalyseurs utilisables dans les réactions de transformation d'hydrocarbures, en particulier dans les procédés de reformage des essences et de production d'aromatiques.

Le reformage catalytique est un procédé permettant d'améliorer l'indice d'octane des coupes pétrolières et en particulier de l'essence lourde de distillation par transformation des n-paraffines et des naphtènes en hydrocarbures aromatiques.

L'opération de reformage catalytique consiste donc à transformer d'une part les n-paraffines en $C_7$-$C_{10}$ en aromatiques et en paraffines légères et d'autre part les naphtènes en $C_7$-$C_{10}$ en aromatiques et en paraffines légères. Ces réactions sont illustrées notamment par la transformation par déshydrogénation des cyclohexanes et la déhydroisomérisation des alkylcyclopentanes pour donner des aromatiques, le méthylcyclohexane donnant par exemple du toluène, ainsi que par la transformation par cyclisation des n-paraffines en aromatiques, le n-heptane donnant par exemple du toluène.

Lors du reformage catalytique se produisent également des réactions de craquage des n-paraffines lourdes en paraffines légères conduisant notamment à des produits en C1-C4 essentiellement du propane, de l'isobutane : ces réactions sont préjudiciables au rendement en reformat.

Enfin, il se produit également la formation de coke par condensation de noyaux aromatiques formant un produit solide, riche en carbone qui se dépose sur le catalyseur.

Les catalyseurs de reformage sont extrêmement sensibles outre le coke à divers poisons susceptibles de dégrader leur activité : en particulier le soufre, l'azote, les métaux et l'eau.

Le coke, en se déposant sur la surface du catalyseur entraine une perte d'activité au cours du temps qui conduit à des températures de fonctionnement plus élevées, un rendement en reformat plus faible, et un rendement en gaz plus important.

De ce fait et eu égard à la régénération du catalyseur, le procédé de reformage catalytique peut être mis en oeuvre de deux manières différentes : de manière semi-régénérative ou cyclique et de manière continue. Dans le premier cas, le procédé est réalisé en lit fixe, dans le second en lit mobile.

Dans le procédé semi-régénératif pour compenser la perte d'activité du catalyseur, on augmente progressivement la température puis l'installation est arrêtée pour procéder à la régénération du catalyseur en éliminant le coke. Dans le reformage cyclique qui est en fait une variante du procédé semi-régénératif, l'installation comporte plusieurs réacteurs en série et chacun est mis hors service à tour de rôle, les dépôts de coke sont éliminés du catalyseur mis hors circuit et le catalyseur régénéré tandis que les autres réacteurs restent en fonctionnement.

Dans le reformage continu, les réacteurs mis en oeuvre sont des réacteurs à lit mobile opérant à basse pression (moins de 15 bars), ce qui permet d'améliorer de façon importante les rendements en reformat et en hydrogène en favorisant les réactions d'aromatisation au détriment de celle de craquage, par contre la formation de coke est fortement accélérée. Le catalyseur traverse les réacteurs puis une action régénératrice.

Les procédés de production d'aromatiques impliquent des réactions de transformation des hydrocarbures paraffiniques et naphténiques en composés aromatiques.

Dans ces procédés de transformation d'hydrocarbures, on utilise habituellement des catalyseurs bifonctionnels contenant par exemple du platine et un support d'alumine chloré, qui associent la fonction acide de l'alumine chloré nécessaire pour les réactions d'isomérisation de naphtènes cyclopentaniques et de cyclisation des paraffines à la fonction déshydrogénante du platine nécessaire pour les réactions de déshydrogénation. Des catalyseurs de ce type comprenant de plus un autre métal tel que le rhénium, l'étain ou le plomb ont été décrits dans US-A-3 700 588 et US-A- 3 415 737.

Le document US-A-4 963 249 décrit l'emploi de catalyseurs du même type comprenant de plus du silicium, pour le réformage d'hydrocarbures.

Le document US-A-4 070 413 décrit un catalyseur de déshydrogénation d'hydrocarbures saturés, qui comprend un support en alumine, un métal du groupe du platine, un métal alcalin ou alcalino-terreux et un métal choisi parmi Ce, Ti, et/ou Pb.

Le document US-A-4 087 352 décrit un catalyseur comprenant un support en alumine, un métal du groupe du platine, un métal choisi parmi Ge, Sn et Pb, un halogène et un métal du groupe des lanthanides.

Comme on l'a vu ci-dessus, les procédés de reformage catalytique peuvent être mis en oeuvre en utilisant soit un lit fixe, soit un lit mobile de catalyseur.

Dans chaque cas, le catalyseur subit un traitement de régénération se déroulant à haute température et en présence de vapeur d'eau, qui consiste, entre autres, à brûler le coke déposé sur le catalyseur. Malheureusement les conditions de ce traitement sont favorables à la dégradation du catalyseur. Il est donc important de rechercher à augmenter la résistance du catalyseur dans ces conditions.

Le catalyseur se présente généralement sous la forme d'extrudés ou de billes d'une taille suffisante de manière à laisser un passage relativement facile aux réactifs et produits gazeux. Il se produit une usure du catalyseur, en particulier par frottement dans les procédés à lit mobile, ce qui provoque la formation de poussières et de grains plus fins. Ces grains plus fins perturbent l'écoulement gazeux et obligent à augmenter la pression d'entrée des réactifs voire, dans certains cas, à arrêter l'unité. Dans les unités à lit mobile, cette usure progressive a de plus pour conséquence de perturber la circulation du catalyseur et de nécessiter l'appoint fréquent de catalyseur neuf.

Un catalyseur tel qu'un catalyseur de reformage doit donc répondre à un grand nombre d'exigences dont certaines peuvent apparaître comme étant contradictoires. Ce catalyseur doit tout d'abord présenter la plus grande activité possible permettant d'obtenir des rendements élevés, mais cette activité doit se conjuguer avec la plus grande sélectivité possible, c'est-à-dire que les réactions de craquage conduisant à des produits légers contenant de 1 à 4 atomes de carbone doivent être limitées.

D'autre part, le catalyseur doit présenter une grande stabilité vis-à-vis de sa désactivation par dépôt de coke ; le catalyseur doit également avoir une excellente résistance à la dégradation lorsqu'il doit subir les conditions extrêmes régnant dans les opérations de régénération répétées qu'il doit subir.

Dans le cas du procédé de reformage continu mettant en oeuvre des réacteurs à lit mobile et comme cela est mentionné ci-dessus, les catalyseurs sont également soumis à une usure intense et progressive par frottement qui conduit à une diminution sensible de leur surface spécifique et à la formation de "fines" préjudiciables au fonctionnement de l'installation. Les catalyseurs actuellement disponibles, s'ils peuvent répondre à l'une ou à plusieurs de ces conditions, ne satisfont pas à l'ensemble des exigences mentionnées ci-dessus.

Aussi, malgré les nombreux perfectionnements déjà réalisés sur les catalyseurs bifonctionnels utilisés, on recherche encore de nouveaux catalyseurs présentant des performances améliorées, non seulement en ce qui concerne le rendement des réactions de transformation, mais aussi la durée de vie du catalyseur.

La présente invention a précisément pour objet un catalyseur multi-fonctionnel qui présente des performances catalytiques améliorées et une durée de vie accrue dans les réactions de reformage et de production d'aromatiques.

Selon l'invention, le catalyseur comprend :

- une matrice constituée de 0 à 100 % en poids d'alumine de transition $\eta$, le complément à 100 % en poids de la matrice étant de l'alumine de transition $\gamma$, et
- par rapport au poids total du catalyseur,

    de 0,01 à 2 % en poids de silicium,
    de 0,1 à 15 % en poids d'au moins un halogène choisi dans le groupe formé par le fluor, le chlore, le brome et l'iode,
    de 0,01 à 2 % en poids d'au moins un métal noble de la famille du platine,
    de 0,005 à 10 % en poids d'au moins un métal promoteur choisi dans le groupe formé par l'étain, le germanium, l'indium, le gallium, le thallium, l'antimoine, le plomb, le rhénium, le manganèse, le chrome, le mobybdène et le tungstène, et il a subi un traitement hydrothermique complémentaire, à une température de 300 à 1000°C, dans une atmosphère gazeuse contenant de la vapeur d'eau, la teneur en eau de l'atmosphère gazeuse étant d'au moins 0,05 %.

Selon une variante de réalisation de l'invention, le catalyseur comprend de plus de 0,001 à 10 % en poids d'au moins un métal dopant choisi dans le groupe constitué des métaux alcalins et alcalino-terreux, des lanthanides, du titane, du zirconium, de l'hafnium, du cobalt, du nickel et du zinc.

On précise que dans la suite de ce texte toutes les teneurs en silicium, halogène, métal noble, métal promoteur et métal dopant sont exprimées en % en poids par rapport au poids total du catalyseur, sauf indications contraires. Par ailleurs, ces teneurs correspondent à la teneur totale en constituant (métal dopant, halogène, métal noble ou métal promoteur) lorsque le constituant comporte plusieurs éléments (halogènes ou métaux).

Selon l'invention, la réalisation d'un traitement hydrothermique complémentaire du catalyseur est très importante. En effet, dans les catalyseurs de l'invention, il a été constaté que la présence de silicium préserve la matrice en alumine(s) du catalyseur d'une perte de surface spécifique lorsqu'il sera soumis aux traitements de régénération nécessaires à sa mise en oeuvre dans des réactions de transformation d'hydrocarbures, mais le catalyseur au silicium a l'inconvénient de produire un craquage important.Dee façon inattendue, le déposant a constaté que le traitement hydrothermique complémentaire sévère en présence d'eau appliqué à ce type de catalyseur a pour effet de préserver la perte de surface spécifique, tout en améliorant les performances catalytiques (craquage plus faible).

De préférence, ce traitement hydrothermique complémentaire est effectué dans une atmosphère gazeuse contenant non seulement de la vapeur d'eau, mais également un halogène tel que le chlore.

Un catalyseur préféré de l'invention comprend :

- un support constitué d'une matrice d'alumine $\gamma$, d'alumine $\eta$ ou d'un mélange d'alumine $\gamma$ et d'alumine $\eta$, et de silicium,

- au moins un halogène,
- un métal catalytique assurant la fonction de déshydrogénation du catalyseur, constitué par un ou plusieurs métaux nobles de la famille du platine, et
- au moins un métal promoteur choisi parmi les métaux cités ci-dessus.

Selon l'invention la matrice est à base d'un oxyde d'aluminium hydraté. On sait que des supports en oxyde d'aluminium de formule générale $Al_2O_3$, $nH_2O$, avec n allant de 0 à 0,6, qui présentent une surface spécifique de 150 à 400 $m^2$/g, peuvent être obtenus par déshydratation contrôlée d'hydroxydes d'aluminium amorphes dans lesquels n a une valeur allant de 1 à 3. Les hydroxydes amorphes de départ peuvent exister sous plusieurs formes dont les plus communes sont la boehmite (n = 1), la gibbsite et la bayérite (n = 3), et ils peuvent conduire lors du traitement de déshydratation à plusieurs oxydes ou alumines de transition tels que les formes $\rho, \gamma, \eta, \chi, \theta, \delta, \kappa$ et $\alpha$ qui se différencient essentiellement par l'organisation de leur structure cristalline. Lors de traitements thermiques, ces différentes formes sont susceptibles d'évolution entre elles, selon une filiation complexe qui dépend des conditions opératoires du traitement. La forme $\alpha$ qui présente une surface spécifique et une acidité presque nulles, est la plus stable à haute température. Pour les catalyseurs de reformage, l'alumine de transition de forme $\gamma$ est la plus souvent employée, en raison du compromis qu'elle présente entre ses propriétés d'acidité et de stabilité thermique.

Selon l'invention, on utilise de l'alumine de transition $\gamma$, de l'alumine de transition $\eta$, ou de préférence un mélange d'alumine de transition $\gamma$ et d'alumine de transition $\eta$.

L'alumine de transition $\eta$ peut être obtenue par calcination de bayérite sous air sec, à la pression atmosphérique, entre 250 et 500°C, de préférence entre 300 et 450°C. La surface spécifique atteinte qui dépend de la température finale de calcination, se situe entre 300 et 500 $m^2$/g. L'alumine $\gamma$ provient, elle de la boehmite par calcination sous air à une température comprise entre 450 et 600°C. La surface spécifique de l'alumine $\gamma$ obtenue est comprise entre 100 et 300 $m^2$/g.

Ces deux alumines de transition ont des structures cristallines proches mais distinctes. La technique de diffraction des rayons X permet notamment de les différencier. Leurs structures sont de type spinelle avec des défauts, leurs réseaux s'écartant légèrement de la symétrie cubique. Cette déformation quadratique est minime pour la forme $\eta$ et nettement marquée pour l'alumine $\gamma$ dont les para-mètres de maille sont les suivants : a = b = 7,95 Å et c = 7,79 Å.

Selon l'invention lorsqu'on utilise un mélange d'alumine de transition $\gamma$ et d'alumine de transition $\eta$, celui-ci peut comprendre de 0,1 à 99 % ou plutôt de 1 à 84 % en poids d'alumine $\eta$. De préférence, ce mélange comprend 3 à 70 % en poids, et mieux encore de 5 à 50 % en poids d'alumine de transition $\eta$, le complément à 100 % en poids du mélange étant de l'alumine de transition $\gamma$.

Selon l'invention, la matrice en alumine est modifiée par du silicium.

La teneur en silicium du catalyseur est de 0,001 à 2 % en poids, de préférence de 0,01 à 1 % en poids.

Le ou les halogéne(s) utilisé(s) pour acidifier le support peuvent représenter au total 0,1 à 15 % en poids, de préférence 0,2 à 10 % en poids. De préférence, on utilise un seul halogène, en particulier le chlore.

Le catalyseur comprend également un ou plusieurs métaux promoteurs qui ont pour effet de promouvoir l'activité déshydrogénante du métal noble du groupe du platine et de limiter la perte de dispersion des atomes de métal noble à la surface du support, qui est en partie responsable de la désactivation du catalyseur.

La teneur totale en métaux promoteurs est de 0,005 à 10 % en poids, de préférence de 0,01 à 1 % en poids.

Les métaux promoteurs sont choisis en fonction du mode d'utilisation du catalyseur.

Ainsi, lorsque le catalyseur est destiné à être utilisé dans un procédé à lit fixe, le métal promoteur est choisi de préférence dans le groupe constitué par le rhénium, le manganèse, le chrome, le molybdène, le tungstène, l'indium et le thallium.

Lorsque le catalyseur doit être utilisé dans un procédé à lit mobile, le métal promoteur est de préférence choisi dans le groupe constitué par l'étain, le germanium, l'indium, l'antimoine, le plomb, le thallium et le gallium.

Parmi ceux-ci, on préfère de plus le rhénium pour les procédés à lit fixe et l'étain pour les procédés à lit mobile car ceux-ci procurent les meilleurs effets de promotion de l'activité du catalyseur.

Le rhénium permet en particulier d'accroître la stabilité du catalyseur vis-à-vis de sa désactivation par dépôt de coke. On utilise donc de préférence le rhénium dans les catalyseurs destinés aux unités à lit fixe car ce gain de stabilité permet d'allonger la durée des cycles réactionnels compris entre deux régénérations du catalyseur.

L'étain, quant à lui, permet d'améliorer les performances des catalyseurs lorsqu'on les utilise à basse pression. Cette amélioration conjointe à la plus faible activité craquante des catalyseurs utilisant l'étain permet d'obtenir des rendements en reformat améliorés, surtout dans les procédés à régénération continue à lit mobile fonctionnant à basse pression opératoire.

La teneur totale en métal (métaux) promoteur(s) est de 0,005 à 10 % en poids, de préférence de 0,01 à 1 % en poids.

Lorsque le catalyseur ne contient qu'un seul métal promoteur, par exemple le rhénium ou l'étain, il est présent de préférence, à raison de 0,005 à 0,9 % en poids et mieux encore de 0,01 à 0,8 % en poids.

Le catalyseur de l'invention comprend de plus au moins un métal noble de la famille du platine à une teneur de 0,01 à 2 % en poids, de préférence de 0,1 à 0,8 % en poids.

Les métaux nobles susceptibles d'être utilisés sont le platine; le palladium, l'iridium ; on préfère le platine.

Selon une variante de réalisation de l'invention, le catalyseur comprend de plus de 0,001 à 10 % en poids d'au moins un métal dopant choisi dans le groupe constitué des métaux alcalins et alcalino-terreux, des lanthanides, du titane, du zirconium, de l'hafnium, du cobalt, du nickel et du zinc.

Dans ce cas, la matrice en alumine est modifiée par du silicium et par un ou plusieurs métaux dopants.

De préférence, les métaux dopants appartiennent à un seul des groupes suivants :

1)- groupe des métaux alcalins et alcalino-terreux,
2)- groupe des lanthanides, et
3)- groupe constitué par le titane, le zirconium, l'hafnium, le cobablt, le nickel et le zinc.

Dans le cas des métaux dopants appartenant au premier groupe (métaux alcalins et alcalino-terreux) la teneur totale en métal dopant du catalyseur est généralement de 0,001 à 8 % en poids.

Les métaux alcalins utilisés peuvent être le lithium, le sodium, le potassium, le rubidium et le césium; les métaux alcalino-terreux peuvent être choisis parmi le béryllium, le magnésium, le calcium, le strontium et le baryum.

La teneur en métal dopant du premier groupe est choisie en particulier en fonction du réacteur dans lequel sera utilisé le catalyseur de l'invention.

Ainsi, dans le cas d'un réacteur à lit fixe, la teneur en métal dopant du catalyseur se situe généralement dans la gamme de 0,001 à 0,3 %, de préférence de 0,005 à 0,3 % et mieux encore de 0,01 à 0,3 %, en poids.

Dans le cas d'un réacteur à lit mobile, la teneur en métal dopant du catalyseur est plus élevée, généralement de plus de 0,3 à 8 %, de préférence de plus de 0,3 à 4 % et mieux encore de 0,7 à 4 % en poids.

De préférence, le métal dopant est un métal alcalin tel que le potassium.

Dans le cas des métaux dopants appartenant au second groupe (lanthanides), la teneur totale en métal dopant du catalyseur peut être de 0,001 à 10 % en poids.

Le groupe des lanthanides ou terres rares est constitué par les éléments de la famille du lanthane dans le classement périodique de Mendeleef et dont les numéros atomiques vont de 57 à 71, par exemple le lanthane, le cérium, le néodyme et le praséodyme.

La teneur totale en métal dopant du second groupe est choisie en particulier également en fonction du réacteur dans lequel sera utilisé le catalyseur.

Ainsi, elle peut être de préférence de 0,001 à 0,5 % et mieux encore de 0,01 à 0,5 % en poids quand le catalyseur est utilisé dans un procédé à lit fixe. De préférence, elle est de plus de 0,5 à 10 %, mieux encore de plus de 0,5 à 4 % en poids quand le catalyseur est utilisé dans un procédé à lit mobile.

Dans le cas des métaux dopants appartenant au troisième groupe (Ti, Zr, Hf, Co, Ni, Zn,), la teneur totale en métal dopant du catalyseur peut être de 0,001 à 10 % en poids.

Elle peut être choisie également en fonction du réacteur dans lequel sera utilisé le catalyseur.

Ainsi, la teneur totale en métal dopant du troisième groupe est, de préférence, de 0,001 à 0,7 % et mieux encore de 0,01 à 0,7 % en poids quand le catalyseur est utilisé dans un procédé à lit fixe. De préférence, elle est de plus de 0,7 à 10 % et mieux encore de plus de 0,7 à 4 % en poids quand le catalyseur est utilisé dans un procédé à lit mobile.

Le catalyseur de l'invention peut être préparé par dépôt de ses différents constituants sur la matrice en alumine. Le dépôt de chaque constituant peut être effectué, en totalité ou partiellement sur l'une ou les deux alumines de la matrice avant ou après mise en forme de celle-ci. Les constituants peuvent être déposés séparément ou simultanément dans n'importe quel ordre.

Ainsi, lorsqu'on utilise comme matrice un mélange d'alumines, on peut déposer les constituants du catalyseur sur les deux alumines ou sur l'une d'entre elles, de préférence sur l'alumine η avant d'effectuer le mélange des deux alumines et leur mise en forme.

On peut aussi effectuer le dépôt partiel ou total d'un ou de certains constituants sur les deux alumines ou l'une d'entre elles avant leur mélange, puis effectuer les autres dépôts après mélange des deux alumines, soit avant, soit après la mise en forme du mélange. Lorsqu'on dépose un ou plusieurs constituants avant de mélanger les deux alumines, on effectue, de préférence, le dépôt de silicium sur l'alumine de transition η.

Toutefois, selon l'invention, on préfère généralement mélanger les deux alumines avant de déposer les constituants métalliques et le ou les halogènes.

Aussi, l'invention a également pour objet un procédé de préparation du catalyseur de l'invention, qui comprend les étapes suivantes :

a) préparation éventuellement par mélange puis par mise en forme d'une matrice en alumine de transition γ, en alumine de transition η, ou en mélange d'alumine de transition η et d'alumine de transition γ,

b) dépôt sur au moins une des alumines de transition γ et η des constituants suivants, dans les pourcentages en poids donnés ci-dessous, qui se rapportent au poids total du catalyseur,

- de 0,01 à 2 % en poids, de préférence de 0,01 à 1 % en poids, de silicium,
- de 0,1 à 15 %, de préférence 0,2 à 10 %, en poids d'au moins un halogène choisi dans le groupe constitué par le fluor, le chlore , le brome et l'iode,
- de 0,01 à 2 % d'au moins un métal noble de la famille du platine, et
- de 0,005 à 10 % en poids d'au moins métal promoteur choisi dans le groupe constitué par l'étain, le germanium, l'indium, le gallium, le thallium, l'antimoine, le plomb, le rhénium, le manganèse, le chrome, le molybdène et le tungstène,
- éventuellement de 0,001 à 10 % en poids d'au moins un métal dopant choisi dans le groupe constitué des métaux alcalins et alcalino-terreux, des lanthanides, du titane, du zirconium, de l'hafnium, du cobalt, du nickel et du zinc.

les étapes a) et b) pouvant être effectuées dans n'importe quel ordre et les dépôts de l'étape b) pouvant être réalisés en partie seulement avant l'étape a) et pouvant être effectués dans n'importe quel ordre ; et

c) traitement hydrothermique complémentaire du catalyseur obtenu après les étapes a) et b), à une température de 300 à 1000°C, dans une atmosphère gazeuse contenant de la vapeur d'eau, la teneur en eau de l'atmosphère gazeuse étant d'au moins 0,05 %.

Selon un mode préféré de mise en oeuvre de ce procédé, on prépare tout d'abord un support formé de la matrice d'alumine et de Si, puis on dépose sur celui-ci le ou les métaux dopants, le ou les métaux promoteurs, le ou les halogènes, et le ou les métaux nobles de la famille du platine.

Dans ce cas, on peut déposer Si sur l'alumine ou le mélange d'alumines, avant ou après mise en forme.

De préférence, on dépose le silicium après mise en forme de la matrice d'alumine.

Aussi, l'invention a également pour objet le support obtenu dans le premier stade de ce procédé préféré, qui est constitué d'une matrice comprenant de 0 à 100 % en poids d'alumine de transition η, le complément à 100 % en poids de la matrice étant de l'alumine de transition γ, et de silicium, la quantité de silicium étant de 0,001 à 2,7 % et de préférence de 0,01 à 1,35 % en poids de silicium par rapport au poids du support.

Le dépôt des différents constituants du catalyseur peut être effectué par des techniques classiques, en phase liquide ou en phase gazeuse, à partir de composés précurseurs appropriés. Lorsque le dépôt est effectué sur la matrice en alumine mise en forme, les techniques employées peuvent être par exemple l'imprégnation à sec, l'imprégnation par excès de solution ou l'échange ionique. Cette opération est suivie si nécessaire d'un séchage et d'une calcination à une température de 300 à 900°C, de préférence en présence d'oxygène.

Ainsi, le silicium peut être déposé à partir de composés tels que les tétraorthosilicates d'alkyle, les alkoxydes de silicium, les silicates d'ammonium quaternaire, les silanes, les disilanes, les silicones, les siloxanes, les halogénures de silicium, les halogénosilicates et silicium sous forme de microbilles de silice colloïdale. Dans le cas où le précurseur de silicium est un fluorosilicate, celui-ci peut répondre à la formule $M_{2/x}SiF_6$, dans laquelle M est un cation métallique ou non métallique possédant la valence x, choisi parmi les cations suivants : $NH_4^+$, des alkyl ammonium, $K^+$, $Na^+$, $Li^+$, $Ba^{2+}$, $Mg^{2+}$, $Cd^{2+}$, $Cu^+$, $Cu^{2+}$, $Ca^{2+}$, $Cs^+$, $Fe^{2+}$, $Co^{2+}$, $Pb^{2+}$, $Mn^{2+}$, $Rb^+$, $Ag^+$, $Sr^{2+}$, $Zn^{2+}$, $Tl^+$ et $H^+$.

Lorsque le silicium est déposé après la mise en forme de la matrice d'alumine, on effectue de préférence ce dépôt par imprégnation en milieu aqueux en utilisant un excès de solution aqueuse de précurseur. On élimine ensuite le solvant d'imprégnation, par exemple par séchage et on procède à une calcination sous air, à une température comprise par exemple entre 300 et 900°C.

Le dépôt du ou des métaux dopants du premier groupe choisis parmi les métaux alcalins et alcalino-terreux peut être effectué par n'importe quelle technique et intervenir à n'importe quel stade du procédé de préparation du catalyseur. Lorsque ce dépôt est réalisé après la mise en forme de la matrice d'alumine, on utilise, de préférence, l'imprégnation en milieu aqueux par excès de solution, suivie d'un séchage pour éliminer le solvant d'imprégnation et d'une calcination sous air à une température comprise par exemple entre 300 et 900°C.

Les composés précurseurs utilisés peuvent être par exemple des sels de métaux alcalins et alcalino-terreux tels que les halogénures, les nitrates, les carbonates, les acétates, les sulfates, les cyanures et les oxalates.

Le dépôt du ou des métaux dopants du second groupe (lanthanides) peut être effectué par toutes les techniques connues de l'homme de l'art, et peut intervenir à tout moment de la préparation du catalyseur. Par exemple, dans le cas où cet élément du groupe des lanthanides ou terres rares est déposé après la mise en forme de la ou des alumines contenant éventuellement d'autres métaux, on peut utiliser l'imprégnation à sec, l'imprégnation par excès de solution ou l'échange ionique. Sur une matrice déjà mise en forme, une méthode préférée d'introduction de cet élément additionnel est l'imprégnation en milieu aqueux en utilisant un excès de solution. Afin d'éliminer le solvant d'imprégnation, cette imprégnation est suivie d'un séchage et d'une calcination sous air à une température comprise par exemple entre 300 et 900°C.

Les composés précurseurs peuvent être, par exemple, les halogénures, les nitrates, les carbonates, les acétates, les sulfates ou les oxalates desdits éléments.

Le dépôt du ou des métaux dopants du troisième groupe constitué par le titane, le zirconium, l'hafnium, le cobalt, le nickel et le zinc sur la matrice du catalyseur utilisé dans la présente invention, est réalisable selon toutes les techniques connues de l'homme de l'art, et peut intervenir à tout moment de la préparation du catalyseur. Par exemple, dans le cas où cet élément est déposé après la mise en forme de la ou des alumines contenant éventuellement d'autres métaux, on peut utiliser l'imprégnation à sec, l'imprégnation par excès de solution ou l'échange ionique. Sur une matrice déjà mise en forme, une méthode préférée d'introduction de cet élément additionnel est l'imprégnation en milieu aqueux en utilisant un excès de solution. Afin d'éliminer le solvant d'imprégnation, cette imprégnation est suivie d'un séchage et d'une calcination sous air à une température comprise par exemple entre 300 et 900°C.

Les dépôts de silicium et d'au moins un élément choisi dans le groupe constitué par le titane, le zirconium, l'hafnium, le cobalt, le nickel et le zinc peuvent être réalisés indépendamment l'un de l'autre et, ou bien sur une alumine de transition ou sur la matrice non mises en forme, ladite matrice comprenant 0 à 99 % poids d'alumine de transition h et le complément à 100 % poids d'alumine de transition g, ou bien encore sur la matrice préformée, cette dernière méthode étant préférée.

Le dépôt du ou des métaux nobles de la famille du platine peut être effectué également par des techniques classiques, notamment l'imprégnation à partir d'une solution aqueuse ou non contenant un sel ou un composé du métal noble. A titre d'exemple de sels ou de composés utilisables, on peut citer l'acide chloroplatinique, les composés ammoniaqués, le chloroplatinate d'ammonium, le dichlorure de platine dicarbonyle, l'acide hexahydroxyplatinique, le chlorure de palladium et le nitrate de palladium.

Dans le cas du platine, les composés ammoniaqués peuvent être par exemple les sels de platine IV hexamines de formule $Pt(NH_3)_6X_4$, les sels de platine IV halogénopentamines de formule $(PtX(NH_3)_5)X_3$, les sels de platine tétrahalogénodiamines de formule $PtX_4(NH_3)_2X$, les complexes de platine avec les halogènes-polycétones et les composés halogénés de formule H $(Pt(aca)_2X)$ dans lesquels l'élément X est un halogène choisi dans le groupe formé par le chlore, le fluor, le brome et l'iode, et de préférence le chlore, et le groupe aca représente le reste de formule $C_5H_7O_2$ dérivé de l'acétylacétone. L'introduction du métal noble de la famille du platine est de préférence effectué par imprégnation à l'aide d'une solution aqueuse ou organique de l'un des composés organométalliques cités ci-dessus. Parmi les solvants organiques utilisables, on peut citer les hydrocarbures paraffiniques, naphténiques ou aromatiques, et les composés organiques halogénés ayant par exemple 1 à 12 atomes de carbone par molécule. On peut citer par exemple le n-heptane, le méthylcyclohexane, le toluène et le chloroforme. On peut aussi utiliser des mélanges de solvants.

Après introduction du métal noble, on effectue de préférence un séchage et une calcination, par exemple à une température de 400 à 700°C.

Le dépôt du ou des métaux nobles de la famille du platine peut intervenir à tout moment lors de la préparation du catalyseur. Il peut être effectué isolément ou simultanément au dépôt d'autres constituants, par exemple du ou des métaux promoteurs. Dans ce dernier cas, on peut utiliser pour l'imprégnation une solution contenant tous les constituants à introduire simultanément.

Le dépôt du ou des métaux promoteurs peut être effectué également par des techniques classiques à partir de composés précurseurs tels que les halogénures, les nitrates, les acétates, les tartrates, les citrates, les carbonates et les oxalates de ces métaux. Tout autre sel ou oxyde de ces métaux soluble dans l'eau, les acides, ou dans un autre solvant approprié, convient également comme précurseur. A titre d'exemples de tels précurseurs, on peut ainsi citer les rhénates, les chromates, les molybdates et les tungstates. On peut aussi introduire le ou les métaux promoteurs, par mélange d'une solution aqueuse de leur(s) composé(s) précurseur(s) avec l'alumine ou les alumines avant mise en forme, suivie d'une calcination sous air à une température comprise entre 400 et 900°C.

L'introduction du ou des métaux promoteurs peut être également effectuée à l'aide d'une solution d'un composé organométallique desdits métaux dans un solvant organique. Dans ce cas, on effectue de préférence ce dépôt après celui du ou des métaux nobles de la famille du platine et calcination du solide, suivie éventuellement d'une réduction à l'hydrogène à haute température, par exemple entre 300 et 500°C. Les composés organométalliques sont choisis dans le groupe constitué par les complexes dudit métal promoteur, en particulier les complexes polycétoniques et les hydrocarbylmétaux tels que les alkyl, cycloalkyl, aryl, alkylaryl et arylalkyl métaux. On peut également employer des composés organohalogénés. On peut citer en particulier le tétrabutylétain dans le cas où le métal promoteur est l'étain, le tétraéthylplomb dans le cas où le métal promoteur est le plomb et le triphénylindium dans le cas où le métal promoteur est l'indium. Le solvant d'imprégnation peut être choisi dans le groupe constitué par les hydrocarbures paraffiniques, naphténiques ou aromatiques contenant de 6 à 12 atomes de carbone par molécule et les composés organiques halogénés contenant de 1 à 12 atomes de carbone par molécule. On peut citer par exemple le n-heptane, le méthylcyclohexane et le chloroforme. On peut aussi utiliser des mélanges des solvants définis ci-dessus.

L'halogène, par exemple le chlore, peut être introduit dans le catalyseur en même temps qu'un autre constituant métallique, par exemple dans les cas où on utilise un halogénure comme composé précurseur du métal de la famille de platine, du métal promoteur ou du métal alcalin ou alcalino-terreux. On peut aussi effectuer cette introduction par imprégnation du support au moyen d'une solution aqueuse contenant un acide ou un sel halogéné. Par exemple, le chlore peut être déposé en utilisant une solution d'acide chlorhydrique. On peut encore effectuer l'introduction de chlore par calcination du catalyseur à une température allant par exemple de 400 à 900°C, en présence d'un composé organique contenant l'halogène comme par exemple $CCl_4$, $CH_2Cl_2$ et $CH_3Cl$.

Bien-entendu, on peut introduire simultanément au moins deux constituants du catalyseur, par exemple à partir d'une solution comprenant des composés précurseurs de ceux-ci. On peut aussi introduire les constituants successivement dans n'importe quel ordre, à partir de solutions distinctes. Dans ce dernier cas, on peut procéder à des séchages et/ou des calcinations intermédiaires.

La mise en forme de la matrice d'alumine peut être réalisée en utilisant les techniques de mise en forme des catalyseurs connues de l'homme de l'art telles que par exemple : l'extrusion, la coagulation en goutte, la dragéification, le séchage par atomisation ou encore le pastillage.

De manière préférée, le procédé de préparation est caractérisé en ce qu'il comprend les étapes successives suivantes :

a) mise en forme de la matrice d'alumine γ ou d'alumine η ou d'un mélange d'alumine γ ou d'alumine η,
b) dépôt de silicium sur cette matrice,
c) dépôt éventuel d'au moins un métal dopant, et
d) dépôt simultané ou successif

- d'au moins un métal promoteur choisi parmi l'étain, le germanium, l'indium, le gallium, le thallium, l'antimoine, le plomb, le rhénium, le manganèse, le chrome, le molybdène et le tungstène ;
- d'au moins un élément choisi dans le groupe constitué par le fluor, le chlore, le brome et l'iode, et
- d'au moins un métal noble de la famille du platine.

Après mise en forme de la matrice et dépôt de tous les constituants, on peut procéder à un traitement thermique final entre 300 et 1000°C, qui peut ne comporter qu'une seule étape à une température de 400 à 900°C de préférence, et sous atmosphère contenant de l'oxygène, et de préférence en présence d'oxygène libre ou d'air. Ce traitement correspond généralement au séchage-calcination suivant le dépôt du dernier constituant.

Après mise en forme de la matrice et dépôt de tous les constituants, on effectue le traitement hydrothermique complémentaire, réalisé à une température de 300 à 1000°C, de préférence de 400 à 700°C, dans une atmosphère gazeuse contenant de la vapeur d'eau et éventuellement un halogène tel que le chlore.

Ce traitement peut être effectué en lit traversé par un courant de gaz ou en atmosphère statique. De préférence, l'atmosphère gazeuse contient de l'eau et éventuellement au moins un halogène. La teneur molaire en eau est de 0,05 à 100 %, de préférence de 1 à 50 %. La teneur molaire en halogène est de 0 à 20 %, de préférence entre 0 et 10 %, et de préférence encore entre 0 et 2 %. La durée de ce traitement est variable en fonction des conditions de température, pression partielle d'eau et quantité de catalyseur. Cette valeur est avantageusement comprise entre une minute et 30 heures, de préférence de 1 à 10 heures. L'atmosphère gazeuse utilisée est par exemple à base d'air, d'oxygène, ou d'un gaz inerte tel que l'argon ou l'azote.

Le rôle de ce traitement à haute température en présence d'eau est important. Comme cela est montré dans les exemples décrits ci-après, en présence de silicium qui préserve la matrice en alumine(s) d'une perte de surface spécifique lors des différents traitements régénératifs, de façon inattendue, un traitement thermique sévère en présence d'eau appliqué à ce type de catalyseur a pour effet de le préserver d'une perte de surface spécifique, tout en améliorant les performances catalytiques.

Après le traitement thermique final, on peut faire subir au catalyseur un traitement d'activation sous hydrogène à haute température, par exemple à une température de 300 à 550°C.

La procédure de traitement sous hydrogène consiste par exemple en une montée lente de la température sous courant d'hydrogène jusqu'à la température maximale de réduction, comprise généralement entre 300 et 550°C et de préférence entre 350 et 450°C, suivie d'un maintien à cette température pendant une durée allant généralement de 1 à 6 heures.

Le catalyseur de l'invention peut être utilisé en particulier dans les réactions de transformation d'hydrocarbures, et plus particulièrement dans les procédés de reformage des essences et de production d'aromatiques.

Les procédés de reformage permettent d'augmenter l'indice d'octane des fractions essences provenant de la distillation du pétrole brut et/ou d'autres procédés de raffinage.

Les procédés de production d'aromatiques fournissent les bases (benzène, toluène et xylène) utilisables en pétrochimie. Ces procédés revêtent un intérêt supplémentaire en contribuant à la production de quantités importantes d'hydrogène indispensable pour les procédés d'hydrotraitement de la raffinerie.

Ces deux procédés se différencient par le choix de conditions opératoires et la composition de la charge.

La charge typique traitée par ces procédés contient des hydrocarbures paraffiniques, naphténiques et aromatiques contenant de 5 à 12 atomes de carbone par molécule. Cette charge est définie, entre autres, par sa densité et sa composition pondérale.

Pour mettre en oeuvre ces procédés, on met en contact la charge d'hydrocarbures avec le catalyseur de la présente invention, à une température de 400 à 700°C, en utilisant la technique du lit mobile ou du lit fixe.

Généralement le débit massique de charge traitée par unité de masse de catalyseur est de 0,1 à 10 kg/kg. h. La pression opératoire peut être fixée entre la pression atmosphérique et 4 MPa.

Une partie de l'hydrogène produit est recyclé selon un taux de recyclage molaire allant de 0,1 à 8. Ce taux est le rapport molaire du débit d'hydrogène recyclé sur le débit de charge.

D'autres caractéristiques et avantages de l'invention apparaîtront mieux à la lecture des exemples qui suivent, donnés bien-entendu à titre illustratif et non limitatif.

### EXEMPLE 1 :

Cet exemple illustre la fabrication d'un catalyseur comprenant une matrice formée d'un mélange d'alumine $\gamma$ et d'alumine $\eta$, sur laquelle sont déposés du silicium, du chlore, de l'étain, et du platine.

#### a) Mise en forme de la matrice en alumine

On prépare tout d'abord la matrice en alumine par mélange d'une poudre d'alumine $\gamma$ d'une surface spécifique de 220 $m^2$/g et d'une poudre d'alumine $\eta$ de surface spécifique égale à 320 $m^2$/g qui a été préparée par calcination de bayérite. La proportion d'alumine $\eta$ est de 10 % en poids. Ce mélange est ensuite mis en forme par extrusion, puis calciné sous un courant d'air sec à 520°C pendant 3 h.

#### b) Dépôt du silicium

Après refroidissement, on dépose du silicium sur la matrice calcinée par mise en contact avec une solution éthanolique d'orthosilicate de tétraéthyle $Si(OC_2H_5)_4$. La concentration de cette solution est de 18,5 g de silicium par litre. Cette mise en contact est réalisée à la température ambiante pendant 2 h sous agitation. Le solvant est ensuite évaporé sous pression réduite. Puis les extrudés imprégnés sont séchés à 120°C pendant 15 h, et calcinés à 530°C sous un courant d'air sec pendant 2 h. On obtient ainsi un support conforme à l'invention.

#### c) Dépôt du platine, de l'étain et du chlore

On dépose ensuite simultanément sur ce support, le platine, l'étain et le chlore par imprégnation par une solution aqueuse chlorée contenant par litre :

0,81 g de platine sous forme d'$H_2PtCl_6$, et
0,96 g d'étain sous forme de $SnCl_2$.

La solution est laissée au contact du support pendant 2 h. Après essorage et séchage pendant 4 h à 120°C, le support imprégné est calciné à 530°C pendant 3 h sous courant d'air sec.

#### d) Traitement hydrothermique

On effectue alors un traitement hydrothermique en présence d'eau et de chlore. Dans ce but, on traite le catalyseur à 510°C pendant 2 h sous un courant de 2000 $dm^3$/h d'air pour 1 kg de produit solide. Cet air contient de l'eau et du chlore injectés dans une zone de préchauffage située en amont du lit de solide. Les concentrations molaires en eau et en chlore sont respectivement égales à 1 % et 0,05 %.

Les caractéristiques du catalyseur obtenu sont données dans le tableau 1.

### EXEMPLE 2 :

On suit le même mode opératoire que dans l'exemple 1 pour préparer un catalyseur comprenant les mêmes constituants, sauf que l'on n'effectue pas le traitement hydrothermique de l'étape d).

Les caractéristiques du catalyseur obtenu sont données également dans le tableau 1.

EXEMPLE COMPARATIF 1:

Dans cet exemple, on suit le même mode opératoire que dans l'exemple 1, mais dans l'étape a) on utilise uniquement de l'alumine γ, et on ne réalise pas l'étape b) de dépôt de silicium et l'étape d) de traitement hydrothermique.

Les caractéristiques du catalyseur obtenu sont également données dans le tableau 1.

Tableau 1

| Catalyseur | Proportion alumine η (% poids de la matrice) | Surface spécifique (m$^2$/g) | Teneur en platine (% en poids) | Teneur en étain (% en poids) | Teneur en chlore (% en poids) | Teneur en silicium (% en poids) |
|---|---|---|---|---|---|---|
| Ex 2 | 10 | 227 | 0,25 | 0,17 | 1,08 | 1,04 |
| Ex 1 | 10 | 228 | 0,24 | 0,18 | 1,13 | 1,02 |
| Ex comparatif 1 | 0 | 219 | 0,23 | 0,18 | 1,15 | 0 |

EXEMPLE 3 :

Dans cet exemple, on teste les catalyseurs des exemples 1 et 2 et de l'exemple comparatif, pour la transformation d'une charge d'hydrocarbures ayant les caractéristiques suivantes :

| masse volumique à 20°C | 0,736    kg/dm$^3$ |
|---|---|
| indice d'octane recherché | ∼ 38 |
| teneur en paraffines | 54,8 % en poids |
| teneur en naphtènes | 33,1 % en poids |
| teneur en aromatiques | 12,1 % en poids |

Les conditions opératoires suivantes sont utilisées :

| température | 500°C |
|---|---|
| pression totale | 1,0 Mpa |
| débit de charge | 1,8 kg/kg de catalyseur |
| durée | 100 h |

A la fin de la durée de fonctionnement, le catalyseur désactivé est régénéré par combustion contrôlée du coke et ajustement de sa teneur en chlore à environ 1,10 % en poids. La surface spécifique du support est mesurée après cette régénération. Puis après activation à haute température du catalyseur par de l'hydrogène, la charge est injectée pour une nouvelle période de fonctionnement. Ainsi, chaque catalyseur a été soumis à 5 cycles fonctionnement-régénération. Les surfaces spécifiques correspondant au début du premier et du dernier cycles et les performances obtenues après 15 h de fonctionnement dans chacun de ces deux cycles sont reportées dans le tableau 2 ci-après.

Tableau 2

| Catalyseur | cycle | Surface spécifique (m2/g) | rendement en reformat (% en poids) | Indice d'octane recherché | Rendement en aromatique (% en poids) | Rendement en C4 (% en poids) |
|---|---|---|---|---|---|---|
| Ex 2 | 1 | 227 | 91,2 | 97,4 | 67,7 | 5,2 |
| | 5 | 226 | 91,6 | 96,9 | 66,8 | 5,1 |
| Ex 1 | 1 | 228 | 91,4 | 98,0 | 68,3 | 5,2 |
| | 5 | 225 | 91,9 | 97,2 | 67,2 | 4,3 |
| Ex comparatif 1 | 1 | 219 | 90,3 | 97,2 | 67,0 | 5,9 |
| | 5 | 197 | 91,7 | 94,8 | 64,8 | 5,1 |

Si l'on compare les performances des catalyseurs des exemples 1 et 2, à celles du catalyseur de l'art antérieur (exemple comparatif 1), on constate que les catalyseurs des exemples 1 et 2 présentent les meilleurs rendements en aromatiques et les meilleures indices d'octane du réformat. On constate également que ces gains se font sans que les rendements en reformat ne soient affectés.

Si l'on considère maintenant l'évolution durant 5 cycles, il apparaît que la chute des surfaces spécifiques des exemples 1 et 2 est beaucoup plus faible que celle du catalyseur de l'art antérieur. Cette moindre chute s'accompagne d'un meilleur maintien des rendements en aromatiques et des indices d'octane.

Les catalyseurs de l'invention permettent donc d'obtenir de façon stable durant plusieurs cycles, les meilleurs indices d'octane pour des rendements en reformat inchangés.

## EXEMPLE 4 :

Cet exemple illustre la fabrication d'un catalyseur comprenant une matrice formée d'un mélange d'alumine $\gamma$ et d'alumine $\eta$, sur laquelle sont déposés du silicium, du chlore, du potassium, du rhénium et du platine.

### a) Mise en forme de la matrice en alumine

On prépare tout d'abord la matrice en alumine par mélange mécanique d'une poudre d'alumine $\gamma$ d'une surface spécifique de 220 m$^2$/g et d'une poudre d'alumine $\eta$ de surface spécifique égale à 320 m$^2$/g qui a été préparée par calcination de bayérite. La proportion d'alumine $\eta$ est de 30 % en poids. Ce mélange est ensuite mis en forme par extrusion, puis calciné sous un courant d'air sec à 520°C pendant 3 h.

### b) Dépôt du silicium

Après refroidissement, on dépose du silicium sur la matrice calcinée par mise en contact avec une solution éthanolique d'orthosilicate de tétraéthyle $Si(OC_2H_5)_4$. La concentration de cette solution est de 2,5 g de silicium par litre. Cette mise en contact est réalisée à la température ambiante pendant 2 h sous agitation. Le solvant est ensuite évaporé sous pression réduite. Puis les extrudés imprégnés sont séchés à 120°C pendant 15 h, et calcinés à 530°C sous un courant d'air sec pendant 2 h.

### c) Dépôt du potassium

On met ensuite les extrudés en contact avec une solution aqueuse de carbonate de potassium $K_2CO_3$ contenant 12,8 g/l de potassium. Cette mise en contact est réalisée à la température ambiante pendant 1 h, puis la matrice ainsi imprégnée est séchée à 120°C pendant 15 h et calcinée à 530°C sous un courant d'air sec pendant 2 h.

### d) Dépôt de platine et de chlore

On dépose ensuite simultanément sur ce support, le platine et une partie du chlore par imprégnation par une solution aqueuse chlorée contenant par litre :

    8,20 g de chlore sous forme de HCl, et
    1,00 g de platine sous forme d'$H_2PtCl_6$.

La solution est laissée au contact du support pendant 2 h. Après essorage et séchage pendant 4 h à 120°C, le support imprégné est calciné à 530°C pendant 3 h sous courant d'air sec.

### e) Dépôt de rhénium et de chlore

On dépose ensuite simultanément le rhénium et le reste du chlore par imprégnation par une solution aqueuse chlorée contenant par litre :

    4,20 g de chlore sous forme HCl, et
    1,50 g de rhénium sous forme de $ReCl_3$.

Après séchage, le support imprégné est calciné à 530°C pendant 2 heures sous un courant d'air sec.

f) Traitement hydrothermique

On effectue alors un traitement hydrothermique en présence d'eau et de chlore. Dans ce but, on traite le catalyseur à 510°C pendant 2 h sous un courant de 2000 dm$^3$/h d'air pour 1 kg de produit solide. Cet air contient de l'eau et du chlore injectés dans une zone de préchauffage située en amont du lit de solide. Les concentrations molaires en eau et en chlore sont respectivement égales à 1 % et 0,05 % .
Les caractéristiques du catalyseur obtenu sont données dans le tableau 3.

**EXEMPLE 5 :**

On suit le même mode opératoire que dans l'exemple 4 pour préparer un catalyseur comprenant les mêmes constituants, sauf que dans l'étape c), la solution d'imprégnation contient 6,4 g/l de potassium, et que l'on n'effectue pas le traitement hydrothermique de l'étape e).
Les caractéristiques du catalyseur obtenu sont données également dans le tableau 3.

**EXEMPLE COMPARATIF 2 :**

Dans cet exemple, on suit le même mode opératoire que dans l'exemple 4, mais dans l'étape a) on utilise uniquement de l'alumine γ, et on ne réalise pas les étapes b) et c) de dépôts de silicium et de potassium et l'étape f) de traitement hydrothermique.
Les caractéristiques du catalyseur obtenu sont également donnés dans le tableau 3.

**EXEMPLE 6 :**

Cet exemple illustre la fabrication d'un catalyseur comprenant une matrice formée d'un mélange d'alumine γ et d'alumine η comprenant 8 % d'alumine η, sur laquelle sont déposés du silicium, du chlore, du potassium, de l'étain et du platine.
Pour cette préparation, on suit le même mode opératoire que dans l'exemple 4, en utilisant dans l'étape a) 8 % en poids d'alumine η et en effectuant au lieu des étapes d) et e) une seule étape de dépôt simultané de platine, d'étain et de chlore par imprégnation par une solution aqueuse chlorée contenant par litre :

0,81 g de platine sous forme d'H$_2$PtCl$_6$, et
0,96 g d'étain sous forme de SnCl$_2$.

La solution est laissée au contact du support pendant 2 h. Après essorage et séchage pendant 4 h à 120°C, le support imprégné est calciné à 530°C pendant 3 h sous courant d'air sec.
On effectue ensuite un traitement hydrothermique en présence d'eau et de chlore comme dans l'étape f) de l'exemple 4.
Les caractéristiques du catalyseur obtenu sont données dans le tableau 3.

**EXEMPLE 7 :**

On suit le même mode opératoire que dans l'exemple 6 pour préparer un catalyseur comprenant les mêmes constituants, sauf que dans l'étape c), la solution d'imprégnation contient 6,4 g/l de potassium, et que l'on n'effectue pas le traitement hydrothermique final en présence d'eau et de chlore.
Les caractéristiques du catalyseur obtenu sont données également dans le tableau 3.

**EXEMPLE COMPARATIF 3 :**

Dans cet exemple, on suit le même mode opératoire que dans l'exemple 6 mais dans l'étape a) on utilise uniquement de l'alumine γ et on ne réalise pas les étapes b) et c) de dépôt de silicium et de potassium et la dernière étape f) de traitement hydrothermique en présence d'eau et de chlore décrite dans l'exemple 1.
Les caractéristiques du catalyseur obtenu sont données dans le tableau 3.

Tableau 3

| Catalyseur | Proportion alumine η (% poids de la matrice) | Surface spécifique (m$^2$/g) | Teneur en platine (% en poids) | Teneur en étain (% en poids) | Teneur en rhénium (% en poids) | Teneur en chlore (% en poids) | Teneur en silicium (% en poids) | Teneur en potassium (% en poids) |
|---|---|---|---|---|---|---|---|---|
| Ex 4 | 30 | 237 | 0,25 | 0 | 0,47 | 1,17 | 0,045 | 0,23 |
| Ex 5 | 30 | 238 | 0,24 | 0 | 0,50 | 1,07 | 0,045 | 0,12 |
| Ex comparatif 2 | 0 | 216 | 0,23 | 0 | 0,48 | 1,12 | 0 | 0 |
| Ex 6 | 8 | 227 | 0,22 | 0,18 | 0 | 1,14 | 0,13 | 0,76 |
| Ex 7 | 8 | 225 | 0,25 | 0,16 | 0 | 1,06 | 0,15 | 0,34 |
| Ex comparatif 3 | 0 | 219 | 0,23 | 0,18 | 0 | 1,15 | 0 | 0 |

**EXEMPLE 8 :**

Dans cet exemple, on teste les catalyseurs des exemples 4 et 5 et de l'exemple comparatif 2, pour la transformation d'une charge d'hydrocarbures ayant les caractéristiques suivantes :

| masse volumique à 20°C | 0,742        kg/dm$^3$ |
|---|---|
| indice d'octane recherché | $\sim$ 41 |
| teneur en paraffines | 52,2 % en poids |
| teneur en naphtènes | 32,4 % en poids |
| teneur en aromatiques | 15,4 % en poids |

Les conditions opératoires suivantes sont utilisées :

| température | 500°C |
|---|---|
| pression totale | 1,5 Mpa |
| débit de charge | 2,0 kg/kg de catalyseur et par h |
| durée | 100 h |

Les performances des catalyseurs sont reportées dans le tableau 4 ci-dessous, et sont exprimés au travers des rendements pondéraux et de l'indice d'octane recherche du reformat.

Tableau 4

| Catalyseur | Rendement reformat (% en poids) | Rendement hydrogène (% en poids) | Rendement aromatiques (% en poids) | Rendement C4 (% en poids) | C4 aromatiques |
|---|---|---|---|---|---|
| Exemple 4 | 85,1 | 3,2 | 60,2 | 11,7 | 0,19 |
| Exemple 5 | 84,7 | 3,3 | 60,8 | 12,0 | 0,20 |
| Ex comparatif 2 | 83,9 | 3,0 | 60,0 | 13,1 | 0,22 |

Si l'on compare les performances des catalyseurs de l'exemple 4 et de l'exemple comparatif 2 d'une part, et celles des catalyseurs de l'exemple 5 et de l'exemple comparatif 2 d'autre part, on constate que les catalyseurs des exemples 4 et 5 ont des performances nettement améliorées par rapport au catalyseur de l'art antérieur (exemple comparatif 2).

En effet, les rendements en produits légers de craquage C4 obtenus lors du test des deux catalyseurs des exemples 4 et 5 sont très significativement inférieurs à ceux observés sur le catalyseur de l'exemple comparatif 2.

Ainsi, on s'aperçoit que le rapport des rendements en produits de craquage C4 sur les rendements en composés aromatiques, dénommé C4-/aromatiques dans le tableau ci-dessus, est inférieur pour les deux catalyseurs selon l'invention. La sélectivité des catalyseurs vis-à-vis des produits aromatiques recherchés sera d'autant plus forte que ce rapport est faible.

Les catalyseurs des exemples 4 et 5 contenant en plus par rapport au catalyseur de l'exemple comparatif 2, de l'alumine η, du silicium et du potassium, présentent des caractéristiques améliorées par rapport au catalyseur de l'exemple comparatif 2, notamment des sélectivités en produits de craquage plus faibles, et donc des sélectivités en produits aromatiques améliorées.

## EXEMPLE 9

Dans cet exemple, on teste les catalyseurs des exemples 6 et 7 et de l'exemple comparatif 3, pour la transformation d'une charge d'hydrocarbures ayant les caractéristiques suivantes :

| | |
|---|---|
| masse volumique à 20°C | 0,736        kg/dm$^3$ |
| indice d'octane recherché | $\sim$ 38 |
| teneur en paraffines | 54,8 % en poids |
| teneur en naphtènes | 33,1 % en poids |
| teneur en aromatiques | 12,1 % en poids |

Les conditions opératoires suivantes sont utilisées :

| | |
|---|---|
| température | 495°C |
| pression totale | 0,75 Mpa |
| débit de charge | 1,8 kg/kg de catalyseur |
| durée | 100 h |

A la fin de la durée de fonctionnement, le catalyseur désactivé est régénéré par combustion contrôlée du coke et ajustement de sa teneur en chlore à environ 1,10 % en poids. La surface spécifique du support est mesurée après cette régénération. Puis après activation à haute température du catalyseur par de l'hydrogène, la charge est injectée pour une nouvelle période de fonctionnement. Ainsi, chaque catalyseur a été soumis à 5 cycles fonctionnement-régénération. Les surfaces spécifiques correspondant au début du premier et du dernier cycles et les performances obtenues après 15 h de fonctionnement dans chacun de ces deux cycles sont reportées dans le tableau 5 ci-après.

Tableau 5

| Catalyseur | cycle | Surface spécifique (m2/g) | rendement en reformat (% en poids) | Indice d'octane recherché | Rendement en aromatique (% en poids) | Rendement en C4 (% en poids) |
|---|---|---|---|---|---|---|
| Ex 6 | 1 | 227 | 91,2 | 97,9 | 68,2 | 5,5 |
| | 5 | 220 | 92,1 | 96,8 | 67,3 | 4,7 |
| Ex 7 | 1 | 225 | 91,2 | 97,6 | 67,9 | 5,4 |
| | 5 | 213 | 91,5 | 96,5 | 66,5 | 5,3 |
| Ex comparatif 3 | 1 | 219 | 90,7 | 97,5 | 67,2 | 6,0 |
| | 5 | 198 | 91,6 | 95,4 | 65,1 | 5,2 |

Si l'on compare les performances des catalyseurs des exemples 6 et 7, à celles du catalyseur de l'art antérieur (exemple comparatif 3), on constate que les catalyseurs des exemples 6 et 7 présentent les meilleurs rendements en aromatiques et les meilleures indices d'octane du reformat. On constate également que ces gains se font sans que les rendements en reformat ne soient affectés.

Si l'on considère maintenant l'évolution durant 5 cycles, il apparaît que la chute des surfaces spécifiques des catalyseurs des exemples 6 et 7 est beaucoup plus faible que celle du catalyseur de l'art antérieur. Cette moindre chute s'accompagne d'un meilleur maintien des rendements en aromatiques et des indices d'octane.

### EXEMPLE 10 :

Cet exemple illustre la fabrication d'un catalyseur comprenant une matrice formée d'un mélange d'alumine $\gamma$ et d'alumine $\eta$, sur laquelle sont déposés du silicium, du chlore, du lanthane, du rhénium et du platine.

#### a) Mise en forme de la matrice en alumine

On prépare tout d'abord la matrice en alumine par mélange mécanique d'une poudre d'alumine $\gamma$ d'une surface spécifique de 220 m$^2$/g et d'une poudre d'alumine $\eta$ de surface spécifique égale à 320 m$^2$/g qui a été préparée par calcination de bayérite. La proportion d'alumine $\eta$ est de 40 % en poids. Ce mélange est ensuite mis en forme par extrusion, puis calciné sous un courant d'air sec à 520°C pendant 3 h.

#### b) Dépôt du silicium

Après refroidissement, on dépose du silicium sur la matrice calcinée par mise en contact avec une solution éthanolique d'orthosilicate de tétraéthyle Si (OC$_2$H$_5$)$_4$. La concentration de cette solution est de 2,5 g de silicium par litre. Cette mise en contact est réalisée à la température ambiante pendant 2 h sous agitation. Le solvant est ensuite évaporé sous pression réduite. Puis les extrudés imprégnés sont séchés à 120°C pendant 15 h, et calcinés à 530°C sous un courant d'air sec pendant 2 h.

#### c) Dépôt de lanthane

On met ensuite les extrudés en contact avec une solution aqueuse de nitrate de lanthane La(NO$_3$)$_3$, 6H$_2$O contenant 42 g/l de lanthane. Cette mise en contact est réalisée à la température ambiante pendant 2 h, puis la matrice ainsi imprégnée est séchée à 120°C pendant 15 h et calcinée à 530°C sous un courant d'air sec pendant 2 h.

#### d) Dépôt de platine et de chlore

On dépose ensuite simultanément sur ce support, le platine et une partie du chlore par imprégnation par une solution aqueuse chlorée contenant par litre :

8,20 g de chlore sous forme de HCl, et
1,00 g de platine sous forme d'H$_2$PtCl$_6$.

La solution est laissée au contact du support pendant 2 h. Après essorage et séchage pendant 4 h à 120°C, le support imprégné est calciné à 530°C pendant 3 h sous courant d'air sec.

#### e) Dépôt de rhénium et de chlore

On dépose ensuite simultanément le rhénium et le reste du chlore par imprégnation par une solution aqueuse chlorée contenant par litre :

4,20 g de chlore sous forme HCl, et
1,50 g de rhénium sous forme de ReCl$_3$.

Après séchage, le support imprégné est calciné à 530°C pendant 2 heures sous un courant d'air sec.

#### f) Traitement hydrothermique

On effectue alors un traitement hydrothermique en présence d'eau et de chlore. Dans ce but, on traite le catalyseur à 510°C pendant 2 h sous un courant de 2000 dm$^3$/h d'air pour 1 kg de produit solide. Cet air contient de l'eau et du chlore injectés dans une zone de préchauffage située en amont du lit de solide. Les concentrations molaires en eau et en chlore sont respectivement égales à 1 % et 0,05 % .
Les caractéristiques du catalyseur obtenu sont données dans le tableau 6.

**EXEMPLE 11 :**

On suit le même mode opératoire que dans l'exemple 10 pour préparer un catalyseur comprenant les mêmes constituants, sauf que dans l'étape c), la solution d'imprégnation contient 21 g/l de lanthane, et que l'on n'effectue pas le traitement hydrothermique de l'étape f).

Les caractéristiques du catalyseur obtenu sont données également dans le tableau 6.

**EXEMPLE 12 :**

Cet exemple illustre la fabrication d'un catalyseur comprenant une matrice formée d'alumine $\gamma$, sur laquelle sont déposés du silicium, du chlore, du lanthane, du rhénium et du platine.

Pour cette préparation, on suit le même mode opératoire que dans l'exemple 10, mais on n'effectue pas l'étape f). Dans l'étape a) on utilise uniquement de l'alumine $\gamma$ et on réalise l'étape b) dans les mêmes conditions que celles de l'exemple 10, sauf la concentration en silicium de la solution qui est de 3,2 g/l. Les étapes c), d) et e) sont réalisées comme dans l'exemple 10.

Les caractéristiques du catalyseur obtenu sont données dans le tableau 6.

**EXEMPLE 13 :**

On suit le même mode opératoire que dans l'exemple 12 pour préparer un catalyseur comprenant les mêmes constituants, mais on effectue de plus un traitement hydrothermique dans les mêmes conditions que celles de l'exemple 10 (étape f).

La teneur en chlore du catalyseur est de 1,08 % en poids.

**EXEMPLE COMPARATIF 4 :**

Dans cet exemple, on suit le même mode opératoire que dans l'exemple 10, mais dans l'étape a) on utilise uniquement de l'alumine $\gamma$, et on ne réalise pas les étapes b) et c) de dépôts de silicium et de lanthane et l'étape f) de traitement hydrothermique.

Les caractéristiques du catalyseur obtenu sont également donnés dans le tableau 6.

**EXEMPLE 14 :**

Cet exemple illustre la fabrication d'un catalyseur comprenant une matrice formée d'un mélange d'alumine $\gamma$ et d'alumine $\eta$ comprenant 12 % d'alumine $\eta$, sur laquelle sont déposés du silicium, du chlore, du lanthane, de l'étain et du platine.

Pour cette préparation, on suit le même mode opératoire que dans l'exemple 10, en utilisant dans l'étape a) 12 % en poids d'alumine $\eta$ et en effectuant au lieu des étapes d) et e) une seule étape de dépôt simultané de platine, d'étain et de chlore par imprégnation par une solution aqueuse chlorée contenant par litre :

0,81 g de platine sous forme d'$H_2PtCl_6$, et
0,96 g d'étain sous forme de $SnCl_2$.

La solution est laissée au contact du support pendant 2 h. Après essorage et séchage pendant 4 h à 120°C, le support imprégné est calciné à 530°C pendant 3 h sous courant d'air sec.

On effectue ensuite un traitement hydrothermique en présence d'eau et de chlore comme dans l'étape f) de l'exemple 10, mais en opérant à 500°C avec des concentrations molaires en eau et chlore respectivement de 1,5 % et 0,02 %.

Les caractéristiques du catalyseur obtenu sont données dans le tableau 6.

**EXEMPLE 15 :**

On suit le même mode opératoire que dans l'exemple 14 pour préparer un catalyseur comprenant les mêmes constituants, sauf que dans l'étape c), la solution d'imprégnation contient 21 g/l de lanthane, et que l'on n'effectue pas le traitement hydrothermique final de l'étape f) en présence d'eau et de chlore.

Les caractéristiques du catalyseur obtenu sont données également dans le tableau 6.

**EXEMPLE COMPARATIF 5 :**

Dans cet exemple, on suit le même mode opératoire que dans l'exemple 14 mais dans l'étape a) on utilise uniquement de l'alumine γ et on ne réalise pas les étapes b) et c) de dépôt de silicium et de lanthane et la dernière étape f) de traitement hydrothermique en présence d'eau et de chlore de l'exemple 14.
Les caractéristiques du catalyseur obtenu sont données dans le tableau 6.

Tableau 6

| Catalyseur | Proportion alumine η (% poids de la matrice) | Surface spécifique (m$^2$/g) | Teneur en platine (% en poids) | Teneur en étain (% en poids) | Teneur en rhénium (% en poids) | Teneur en chlore (% en poids) | Teneur en silicium (% en poids) | Teneur en lanthane (% en poids) |
|---|---|---|---|---|---|---|---|---|
| Ex 10 | 40 | | 0,23 | 0 | 0,24 | 1,18 | 0,028 | 0,47 |
| Ex 11 | 40 | | 0,22 | 0 | 0,24 | 1,09 | 0,028 | 0,11 |
| Ex 12 | 0 | | 0,24 | | 0,23 | 1,05 | 0,035 | 0,43 |
| Ex comparatif 4 | 0 | | 0,23 | 0 | 0,25 | 1,12 | 0 | 0 |
| Ex 14 | 12 | 229 | 0,24 | 0,16 | 0 | 1,13 | 0,11 | 1,70 |
| Ex 15 | 12 | 231 | 0,24 | 0,16 | 0 | 1,08 | 0,13 | 0,82 |
| Ex comparatif 5 | 0 | 219 | 0,25 | 0,18 | 0 | 1,15 | 0 | 0 |

**EXEMPLE 16 :**

Dans cet exemple, on teste les catalyseurs des exemples 10 à 13 et de l'exemple comparatif 4, pour la transformation d'une charge d'hydrocarbures ayant les caractéristiques suivantes :

| | |
|---|---|
| masse volumique à 20°C | 0,742        kg/dm$^3$ |
| indice d'octane recherché | ∼ 41 |
| teneur en paraffines | 52,2 % en poids |
| teneur en naphtènes | 32,4 % en poids |
| teneur en aromatiques | 15,4 % en poids |

Les conditions opératoires suivantes sont utilisées :

| | |
|---|---|
| température | 490°C |
| pression totale | 1,4 Mpa |
| débit massique de charge | 3,0 kg/kg de catalyseur et par h |

Les performances des catalyseurs sont reportées dans le tableau 7 ci-dessous, et sont exprimées au travers des rendements pondéraux et de l'indice d'octane recherche du reformat.

Tableau 7

| Catalyseur | Rendement reformat (% en poids) | Rendement hydrogène (% en poids) | Rendement aromatiques (% en poids) | Rendement C4 (% en poids) | $\frac{C4}{aromatiques}$ |
|---|---|---|---|---|---|
| Exemple 10 | 86,0 | 3,2 | 58,9 | 10,8 | 0,18 |
| Exemple 11 | 85,2 | 3,2 | 59,2 | 11,6 | 0,20 |

Tableau 7   (suite)

| Catalyseur | Rendement reformat (% en poids) | Rendement hydrogène (% en poids) | Rendement aromatiques (% en poids) | Rendement C4 (% en poids) | $\frac{C4}{aromatiques}$ |
|---|---|---|---|---|---|
| Exemple 12 | 84,8 | 3,1 | 58,7 | 12,1 | 0,20 |
| Exemple 13 | 85,7 | 3,2 | 58,8 | 11,1 | 0,19 |
| Ex comparatif 4 | 84,4 | 3,0 | 58,4 | 12,6 | 0,22 |

Si l'on compare les performances des catalyseurs de l'exemple 10 et de l'exemple comparatif 4 d'une part, et celles des catalyseurs de l'exemple 11 et de l'exemple comparatif 4 d'autre part, on constate que les catalyseurs des exemples 10 et 11 ont des performances nettement améliorées par rapport au catalyseur de l'art antérieur (exemple comparatif 4).

En effet, les rendements en produits légers de craquage C4 obtenus lors du test des deux catalyseurs des exemples 10 et 11 sont très significativement inférieurs à ceux observés sur le catalyseur de l'exemple comparatif 4.

Ainsi, on s'aperçoit que le rapport des rendements en produits de craquage C4 sur les rendements en composés aromatiques, dénommé C4-/aromatiques dans le tableau ci-dessus, est inférieur pour les deux catalyseurs selon l'invention. La sélectivité des catalyseurs vis-à-vis des produits aromatiques recherchés sera d'autant plus forte que ce rapport est faible.

Les catalyseurs des exemples 10 et 11 contenant en plus par rapport au catalyseur de l'exemple comparatif 4, de l'alumine η, du silicium et du lanthane, présentent des caractéristiques améliorées par rapport au catalyseur de l'exemple comparatif 4, notamment des sélectivités en produits de craquage plus faibles, et donc des sélectivités en produits aromatiques améliorées.

Si l'on compare les performances des catalyseurs des exemples 12 et 13, on constate que le catalyseur de l'exemple 13 présente des performances améliorées par rapport au catalyseur de l'exemple 12.

En effet, le catalyseur de l'exemple 13 présente un rendement en produits de craquage C4- nettement inférieur et un rendement en aromatique sensiblement supérieur. Le rapport des rendements en produits de craquage C4- sur les rendements en composés aromatiques, dénommé C4-/aromatiques dans le tableau ci-dessus, est inférieur pour le catalyseur de l'exemple 13. La sélectivité des catalyseurs vis-à-vis des produits aromatiques recherchés, sera d'autant plus forte que ce rapport est faible.

Les catalyseurs des exemples 12 et 13 contiennent entre autres du silicium et du lanthane. Le catalyseur de l'exemple 13 a, en plus, été soumis à un traitement hydrothermique. Il présente des caractéristiques améliorées par rapport au catalyseur de l'exemple 12, notamment des sélectivités en produits de craquage plus faibles, et donc des sélectivités en produits aromatiques améliorées.

## EXEMPLE 17

Dans cet exemple, on teste les catalyseurs des exemples 14 et 15 et de l'exemple comparatif 5, pour la transformation d'une charge d'hydrocarbures ayant les caractéristiques suivantes :

| | |
|---|---|
| masse volumique à 20°C | 0,736        kg/dm$^3$ |
| indice d'octane recherché | $\sim$ 38 |
| teneur en paraffines | 54,8 % en poids |
| teneur en naphtènes | 33,1 % en poids |
| teneur en aromatiques | 12,1 % en poids |

Les conditions opératoires suivantes sont utilisées :

| | |
|---|---|
| température | 500°C |
| pression totale | 0,40 Mpa |
| débit de charge | 2,0 kg/kg de catalyseur |
| durée | 100 h |

A la fin de la durée de fonctionnement, le catalyseur désactivé est régénéré par combustion contrôlée du coke et ajustement de sa teneur en chlore à environ 1,10 % en poids. La surface spécifique du support est mesurée après cette régénération. Puis après activation à haute température du catalyseur par de l'hydrogène, la charge est injectée pour une nouvelle période de fonctionnement. Ainsi, chaque catalyseur a été soumis à 5 cycles fonctionnement-régénération. Les surfaces spécifiques correspondant au début du premier et du dernier cycles et les performances obtenues après 15 h de fonctionnement dans chacun de ces deux cycles sont reportées dans le tableau 8 ci-après.

Tableau 8

| Catalyseur | cycle | Surface spécifique (m2/g) | rendement en reformat (% en poids) | Indice d'octane recherché | Rendement en aromatique (% en poids) | Rendement en C4 (% en poids) |
|---|---|---|---|---|---|---|
| Ex 14 | 1 | 229 | 90,0 | 101,0 | 71,7 | 6,5 |
| | 5 | 224 | 90,8 | 100,1 | 71,1 | 5,7 |
| Ex 15 | 1 | 231 | 89,2 | 101,4 | 71,8 | 7,2 |
| | 5 | 222 | 90,2 | 100,3 | 70,8 | 6,4 |
| Ex comparatif 5 | 1 | 219 | 88,2 | 100,9 | 70,5 | 8,5 |
| | 5 | 194 | 89,4 | 98,6 | 67,8 | 7,5 |

Si l'on compare les performances des catalyseurs des exemples 14 et 15, à celles du catalyseur de l'art antérieur (exemple comparatif 5), on constate que les catalyseurs des exemples 14 et 15 présentent les meilleurs rendements en aromatiques et les meilleures indices d'octane du reformat. On constate également que ces gains se font sans que les rendements en reformat ne soient affectés.

Si l'on considère maintenant l'évolution durant 5 cycles, il apparaît que la chute des surfaces spécifiques des catalyseurs des exemples 14 et 15 est beaucoup plus faible que celle du catalyseur de l'art antérieur. Cette moindre chute s'accompagne d'un meilleur maintien des rendements en aromatiques et des indices d'octane.

### EXEMPLE 18 :

Cet exemple illustre la fabrication d'un catalyseur comprenant une matrice formée d'un mélange d'alumine $\gamma$ et d'alumine $\eta$, sur laquelle sont déposés du silicium, du chlore, du zirconium, du rhénium et du platine.

#### a) Mise en forme de la matrice en alumine

On prépare tout d'abord la matrice en alumine par mélange mécanique d'une poudre d'alumine $\gamma$ d'une surface spécifique de 220 $m^2/g$ et d'une poudre d'alumine $\eta$ de surface spécifique égale à 320 $m^2/g$ qui a été préparée par calcination de bayérite. La proportion d'alumine $\eta$ est de 20 % en poids. Ce mélange est ensuite mis en forme par extrusion, puis calciné sous un courant d'air sec à 520°C pendant 3 h.

#### b) Dépôt du silicium

Après refroidissement, on dépose du silicium sur la matrice calcinée par mise en contact avec une solution éthanolique d'orthosilicate de tétraéthyle $Si(OC_2H_5)_4$. La concentration de cette solution est de 2,5 g de silicium par litre. Cette mise en contact est réalisée à la température ambiante pendant 2 h sous agitation. Le solvant est ensuite évaporé sous pression réduite. Puis les extrudés imprégnés sont séchés à 120°C pendant 15 h, et calcinés à 530°C sous un courant d'air sec pendant 2 h.

#### c) Dépôt du zirconium

On met ensuite les extrudés en contact avec une solution aqueuse de chlorure de zirconyle $ZrOCl_2$, 8H20 contenant 26,7 g/l de zirconium. Cette mise en contact est réalisée à la température ambiante pendant 2 h, puis la matrice ainsi imprégnée est séchée à 120°C pendant 15 h et calcinée à 530°C sous un courant d'air sec pendant 2 h.

#### d) Dépôt de platine et de chlore

On dépose ensuite simultanément sur ce support, le platine et une partie du chlore par imprégnation par une solution aqueuse chlorée contenant par litre :

8,20 g de chlore sous forme de HCl, et
1,00 g de platine sous forme d'H$_2$PtCl$_6$.

La solution est laissée au contact du support pendant 2 h. Après essorage et séchage pendant 4 h à 120°C, le support imprégné est calciné à 530°C pendant 3 h sous courant d'air sec.

e) Dépôt de rhénium et de chlore

On dépose ensuite simultanément le rhénium et le reste du chlore par imprégnation par une solution aqueuse chlorée contenant par litre :

4,20 g de chlore sous forme HCl, et
1,50 g de rhénium sous forme de ReCl$_3$.

Après séchage, le support imprégné est calciné à 530°C pendant 2 heures sous un courant d'air sec.

f) Traitement hydrothermique

On effectue alors un traitement hydrothermique en présence d'eau et de chlore. Dans ce but, on traite le catalyseur à 510°C pendant 2 h sous un courant de 2000 dm$^3$/h d'air pour 1 kg de produit solide. Cet air contient de l'eau et du chlore injectés dans une zone de préchauffage située en amont du lit de solide. Les concentrations molaires en eau et en chlore sont respectivement égales à 1 % et 0,05 % .
Les caractéristiques du catalyseur obtenu sont données dans le tableau 9.

**EXEMPLE 19 :**

On suit le même mode opératoire que dans l'exemple 18 pour préparer un catalyseur comprenant les mêmes constituants, sauf que dans l'étape c), la solution d'imprégnation contient 13,3 g/l de zirconium, et que l'on n'effectue pas le traitement hydrothermique de l'étape f).
Les caractéristiques du catalyseur obtenu sont données également dans le tableau 9.

**EXEMPLE COMPARATIF 6 :**

Dans cet exemple, on suit le même mode opératoire que dans l'exemple 18, mais dans l'étape a) on utilise uniquement de l'alumine γ, et on ne réalise pas les étapes b) et c) de dépôts de silicium et de zirconium et l'étape f) de traitement hydrothermique.
Les caractéristiques du catalyseur obtenu sont également donnés dans le tableau 9.

**EXEMPLE 20 :**

Cet exemple illustre la fabrication d'un catalyseur comprenant une matrice formée d'un mélange d'alumine γ et d'alumine η comprenant 8 % d'alumine η, sur laquelle sont déposés du silicium, du chlore, du zirconium, de l'étain et du platine.
Pour cette préparation, on suit le même mode opératoire que dans l'exemple 18, en utilisant dans l'étape a) 8 % en poids d'alumine η et en effectuant au lieu des étapes d) et e) une seule étape de dépôt simultané de platine, d'étain et de chlore par imprégnation par une solution aqueuse chlorée contenant par litre :

0,81 g de platine sous forme d'H$_2$PtCl$_6$, et
0,96 g d'étain sous forme de SnCl$_2$.

La solution est laissée au contact du support pendant 2 h. Après essorage et séchage pendant 4 h à 120°C, le support imprégné est calciné à 530°C pendant 3 h sous courant d'air sec.
On effectue ensuite un traitement hydrothermique en présence d'eau et de chlore comme dans l'étape f) de l'exemple 18.
Les caractéristiques du catalyseur obtenu sont données dans le tableau 9.

**EXEMPLE 21 :**

On suit le même mode opératoire que dans l'exemple 20 pour préparer un catalyseur comprenant les mêmes constituants, sauf que dans l'étape c), la solution d'imprégnation contient 13,3 g/l de zirconium, et que l'on n'effectue pas le traitement hydrothermique final en présence d'eau et de chlore.
Les caractéristiques du catalyseur obtenu sont données également dans le tableau 9.

**EXEMPLE COMPARATIF 7 :**

Dans cet exemple, on suit le même mode opératoire que dans l'exemple 20 mais dans l'étape a) on utilise uniquement de l'alumine γ et on ne réalise pas les étapes b) et c) de dépôt de silicium et de zirconium et la dernière étape f) de traitement hydrothermique en présence d'eau et de chlore.
Les caractéristiques du catalyseur obtenu sont données dans le tableau 9.

Tableau 9

| Catalyseur | Proportion alumine η (% poids de la matrice) | Surface spécifique ($m^2$/g) | Teneur en platine (% en poids) | Teneur en étain (% en poids) | Teneur en rhénium (% en poids) | Teneur en chlore (% en poids) | Teneur en silicium (% en poids) | Teneur en zirconium (% en poids) |
|---|---|---|---|---|---|---|---|---|
| Ex 18 | 20 | | 0,24 | 0 | 0,26 | 1,16 | 0,032 | 0,51 |
| Ex 19 | 20 | | 0,23 | 0 | 0,23 | 1,05 | 0,032 | 0,15 |
| Ex comparatif 6 | 0 | | 0,23 | 0 | 0,25 | 1,12 | 0 | 0 |
| Ex 20 | 8 | 223 | 0,22 | 0,17 | 0 | 1,12 | 0,12 | 1,72 |
| Ex 21 | 8 | 226 | 0,25 | 0,15 | 0 | 1,05 | 0,14 | 0,85 |
| Ex comparatif 7 | 0 | 219 | 0,24 | 0,18 | 0 | 1,15 | 0 | 0 |

**EXEMPLE 22 :**

Dans cet exemple, on teste les catalyseurs des exemples 18 et 19 et de l'exemple comparatif 6, pour la transformation d'une charge d'hydrocarbures ayant les caractéristiques suivantes :

| | |
|---|---|
| masse volumique à 20°C | 0,742          kg/dm$^3$ |
| indice d'octane recherché | ~ 41 |
| teneur en paraffines | 52,2 % en poids |
| teneur en naphtènes | 32,4 % en poids |
| teneur en aromatiques | 15,4 % en poids |

Les conditions opératoires suivantes sont utilisées :

| | |
|---|---|
| température | 505°C |
| pression totale | 1,3 Mpa |
| débit de charge | 4,0 kg/kg de catalyseur et par h |
| durée | 100 h |

Les performances des catalyseurs sont reportées dans le tableau 10 ci-dessous, et sont exprimées au travers des rendements pondéraux et de l'indice d'octane recherche du reformat.

Tableau 10

| Catalyseur | Rendement reformat (% en poids) | Rendement hydrogène (% en poids) | Rendement aromatiques (% en poids) | Rendement C4 (% en poids) | $\frac{C4}{aromatiques}$ |
|---|---|---|---|---|---|
| Exemple 18 | 86,0 | 3,2 | 60,4 | 10,8 | 0,18 |
| Exemple 19 | 85,2 | 3,2 | 61,1 | 11,5 | 0,19 |
| Ex comparatif 6 | 84,4 | 3,0 | 59,8 | 12,8 | 0,21 |

Si l'on compare les performances des catalyseurs de l'exemple 18 et de l'exemple comparatif 6 d'une part, et celles des catalyseurs de l'exemple 19 et de l'exemple comparatif 6 d'autre part, on constate que les catalyseurs des exemples 18 et 19 ont des performances nettement améliorées par rapport au catalyseur de l'art antérieur (exemple comparatif 6).

En effet, les rendements en produits légers de craquage C4 obtenus lors du test des deux catalyseurs des exemples 18 et 19 sont très significativement inférieurs à ceux observés sur le catalyseur de l'exemple comparatif 6.

Ainsi, on s'aperçoit que le rapport des rendements en produits de craquage C4 sur les rendements en composés aromatiques, dénommé C4-/aromatiques dans le tableau ci-dessus, est inférieur pour les deux catalyseurs des exemples 18 et 19. La sélectivité des catalyseurs vis-à-vis des produits aromatiques recherchés sera d'autant plus forte que ce rapport est faible.

Les catalyseurs des exemples 18 et 19, contenant en plus par rapport au catalyseur de l'exemple comparatif 6, de l'alumine η, du silicium et du zirconium, présentent des caractéristiques améliorées par rapport au catalyseur de l'exemple comparatif 6, notamment des sélectivités en produits de craquage plus faibles, et donc des sélectivités en produits aromatiques améliorées.

### EXEMPLE 23 :

Dans cet exemple, on teste les catalyseurs des exemples 20 et 21 et de l'exemple comparatif 7, pour la transformation d'une charge d'hydrocarbures ayant les caractéristiques suivantes :

| | |
|---|---|
| masse volumique à 20°C | 0,742          kg/dm$^3$ |
| indice d'octane recherché | $\sim$ 41 |
| teneur en paraffines | 44,2 % en poids |
| teneur en naphtènes | 39,4 % en poids |
| teneur en aromatiques | 16,4 % en poids |

Les conditions opératoires suivantes sont utilisées :

| | |
|---|---|
| température | 505°C |
| pression totale | 0,75 Mpa |
| débit de charge | 2,5 kg/kg de catalyseur |
| durée | 100 h |

A la fin de la durée de fonctionnement, le catalyseur désactivé est régénéré par combustion contrôlée du coke et ajustement de sa teneur en chlore à environ 1,10 % en poids. La surface spécifique du support est mesurée après cette régénération. Puis après activation à haute température du catalyseur par de l'hydrogène, la charge est injectée pour une nouvelle période de fonctionnement. Ainsi, chaque catalyseur a été soumis à 5 cycles fonctionnement-régénération. Les surfaces spécifiques correspondant au début du premier et du dernier cycles et les performances obtenues après 15 h de fonctionnement dans chacun de ces deux cycles sont reportées dans le tableau 11 ci-après.

Tableau 11

| Catalyseur | cycle | Surface spécifique (m2/g) | rendement en reformat (% en poids) | Indice d'octane recherché | Rendement en aromatique (% en poids) | Rendement en C4 (% en poids) |
|---|---|---|---|---|---|---|
| Ex 20 | 1 | 223 | 89,7 | 102,1 | 73,3 | 6,6 |
| | 5 | 212 | 90,7 | 100,7 | 71,9 | 5,8 |
| Ex 21 | 1 | 226 | 90,4 | 101,9 | 73,6 | 5,9 |
| | 5 | 209 | 90,7 | 100,5 | 71,6 | 5,7 |
| Ex comparatif 7 | 1 | 219 | 89,2 | 102,0 | 72,8 | 7,3 |
| | 5 | 196 | 90,2 | 100,2 | 70,7 | 6,4 |

Si l'on compare les performances des catalyseurs des exemples 20 et 21, à celles du catalyseur de l'art antérieur (exemple comparatif 7), on constate que les catalyseurs des exemples 20 et 21 présentent les meilleurs rendements en aromatiques et les meilleures indices d'octane du reformat. On constate également que ces gains se font sans que les rendements en reformat ne soient affectés.

Si l'on considère maintenant l'évolution durant 5 cycles, il apparaît que la chute des surfaces spécifiques des catalyseurs des exemples 20 et 21 est beaucoup plus faible que celle du catalyseur de l'art antérieur. Cette moindre chute s'accompagne d'un meilleur maintien des rendements en aromatiques et des indices d'octane.

Le procédé de l'invention permet donc d'améliorer de façon substantielle les résultats obtenus par la transformation d'hydrocarbures en composés aromatiques, en terme de sélectivité et de stabilité au cours des cycles de réaction.


**Revendications**

1.   Catalyseur comprenant :

-   une matrice constituée de 0 à 100 % en poids d'alumine de transition $\eta$, le complément à 100 % en poids de la matrice étant de l'alumine de transition $\gamma$, et
-   par rapport au poids total du catalyseur,

de 0,01 à 2 % en poids de silicium,
de 0,1 à 15 % en poids d'au moins un halogène choisi dans le groupe formé par le fluor, le chlore, le brome et l'iode,
de 0,01 à 2 % en poids d'au moins un métal noble de la famille du platine, et
de 0,005 à 10 % en poids d'au moins un métal promoteur choisi dans le groupe formé par l'étain, le germanium, l'indium, le gallium, le thallium, l'antimoine, le plomb, le rhénium, le manganèse, le chrome, le mobybdène et le tungstène,

ledit catalyseur ayant subi un traitement hydrothermique complémentaire, à une température de 300 à 1000°C, dans une atmosphère gazeuse contenant de la vapeur d'eau, la teneur molaire en eau de l'atmosphère gazeuse étant d'au moins 0,05%.

2.   Catalyseur selon la revendication 1, dans lequel la matrice comprend de 3 à 70 % en poids d'alumine de transition $\eta$.

3.   Catalyseur selon l'une quelconque des revendications 1 à 2, comprenant en outre, par rapport au poids total du catalyseur, de 0,001 à 8 % en poids d'au moins un métal dopant choisi dans le groupe des métaux alcalins et alcalino-terreux.

4.   Catalyseur selon la revendication 3, dans lequel le métal dopant est le potassium.

5.   Catalyseur selon l'une quelconque des revendications 1 à 2, comprenant en outre, par rapport au poids total du catalyseur, de 0,001 à 10 % en poids d'au moins un métal dopant choisi dans le groupe constitué par le titane, le zirconium, l'hafnium, le cobalt, le nickel et le zinc.

6. Catalyseur selon la revendication 5, dans lequel le métal dopant est le zirconium .

7. Catalyseur selon l'une quelconque des revendications 1 à 2, comprenant en outre, par rapport au poids total du catalyseur, de 0,001 à 10 % en poids d'au moins un métal dopant choisi dans le groupe des lanthanides.

8. Catalyseur selon la revendication 7, dans lequel le métal dopant est le lanthane.

9. Catalyseur selon l'une quelconque des revendications 1 à 8, dans lequel la teneur en silicium est de 0,01 à 1 % en poids.

10. Catalyseur selon l'une quelconque des revendications 1 à 8, dans lequel la teneur en halogène est de 0,2 à 10 % en poids.

11. Catalyseur selon l'une quelconque des revendications 1 à 8, dans lequel la teneur totale en métal noble est de 0,1 à 0,8 % en poids.

12. Catalyseur selon l'une quelconque des revendications 1 à 8, dans lequel le métal promoteur est choisi dans le groupe formé par l'étain, le germanium, l'indium, l'antimoine, le plomb, le thallium, le gallium et leurs mélanges.

13. Catalyseur selon la revendication 12, dans lequel le métal promoteur est l'étain.

14. Catalyseur selon l'une quelconque des revendications 1 à 8, dans lequel le métal promoteur est choisi dans le groupe formé par le rhénium, le manganèse, le chrome, le molybdène, le tungstène, l'indium et le thallium.

15. Catalyseur selon l'une quelconque des revendications 1 à 8, dans lequel l'halogène est le chlore.

16. Catalyseur selon l'une quelconque des revendications 1 à 8, dans lequel le métal noble est le platine.

17. Procédé de préparation d'un catalyseur, selon l'une quelconque des revendications 1 à 8, **caractérisé en ce qu'**il comprend les étapes suivantes :

a) préparation éventuellement par mélange puis par mise en forme d'une matrice en alumine de transition $\gamma$, en d'alumine de transition $\eta$, ou en mélange d'alumine de transition $\eta$ et d'alumine de transition $\gamma$ ;
b) dépôt sur au moins une des alumines de transition $\gamma$ et $\eta$ des constituants suivants, dans les pourcentages en poids donnés ci-dessous, qui se rapportent au poids total du catalyseur,

- de 0,01 à 2 % en poids de silicium,
- de 0,1 à 15 % en poids d'au moins un halogène choisi dans le groupe constitué par le fluor, le chlore , le brome et l'iode,
- de 0,01 à 2 % d'au moins un métal noble de la famille du platine,
- de 0,005 à 10 % en poids d'au moins métal promoteur choisi dans le groupe constitué par l'étain, le germanium, l'indium, le gallium, le thallium, l'antimoine, le plomb, le rhénium, le manganèse, le chrome, le molybdène et le tungstène, et
- éventuellement de 0,001 à 10 % en poids d'au moins un métal dopant choisi dans le groupe constitué des métaux alcalins et alcalino-terreux, des lanthanides, du titane, du zirconium, de l'hafnium, du cobalt, du nickel et du zinc,

les étapes a) et b) pouvant être effectuées dans n'importe quel ordre et les dépôts de l'étape b) pouvant être réalisés en partie seulement avant l'étape a) et pouvant être effectués dans n'importe quel ordre ; et
c) traitement hydrothermique complémentaire du catalyseur obtenu après les étapes a) et b), à une température de 300 à 1000°C, dans une atmosphère gazeuse contenant de la vapeur d'eau, la teneur molaire en eau de l'atmosphère gazeuse étant d'au moins 0,05%.

18. Procédé selon la revendication 17, dans lequel les dépôts sont réalisés par imprégnation à partir d'au moins une solution contenant au moins un composé précurseur d'un constituant à déposer, suivie d'une calcination à une température de 300° à 900°C.

**19.** Procédé selon l'une quelconque des revendications 17 et 18, **caractérisé en ce qu'**il comprend les étapes successives suivantes :

a) mise en forme de la matrice d'alumine $\gamma$ ou d'alumine $\eta$ ou d'un mélange d'alumine $\gamma$ ou d'alumine $\eta$,
b) dépôt de silicium sur cette matrice,
c) dépôt éventuel d'au moins un métal dopant, et
d) dépôt simultané ou successif

-   d'au moins un métal promoteur choisi parmi l'étain, le germanium, l'indium, le gallium, le thallium, l'antimoine, le plomb, le rhénium, le manganèse, le chrome, le molybdène et le tungstène,
-   d'au moins un élément choisi dans le groupe constitué par le fluor, le chlore, le brome et l'iode, et
-   d'au moins un métal noble de la famille du platine.

**20.** Procédé selon la revendication 17, **caractérisé en ce que** le traitement hydrothermique complémentaire est effectué pendant une durée de 1 minute à 30 heures, sous une atmosphère gazeuse dont la teneur molaire en eau est de 0,05 à 100 %.

**21.** Procédé selon la revendication 20, dans lequel la teneur molaire en eau est de 1 à 50 %.

**22.** Procédé selon l'une quelconque des revendications 20 et 21, dans lequel la durée du traitement hydrothermique est de 1 à 10 heures.

**23.** Procédé selon l'une quelconque des revendications 17 et 20 à 22, **caractérisé en ce que** l'atmosphère gazeuse comprend de plus au moins un halogène.

**24.** Procédé selon la revendication 23, **caractérisé en que** la teneur en halogène de l'atmosphère gazeuse peut aller jusqu'à 20 % en mol.

**25.** Procédé selon la revendication 23, **caractérisé en ce que** la teneur en halogène peut aller jusqu'à 10 % en mol.

**26.** Procédé selon la revendication 23, **caractérisé en ce que** la teneur en halogène peut aller jusqu'à 2 % en mol.

**27.** Procédé selon l'une quelconque des revendications 17 et 20 à 26, **caractérisé en ce que** l'atmosphère gazeuse est de l'air, de l'oxygène, de l'argon ou de l'azote.

**Patentansprüche**

**1.** Katalysator umfassend:

eine Matrix, die gebildet ist aus 0 bis 100 Gew.-% Übergangstonerde $\eta$, wobei der Rest zu 100 Gew.-% der Matrix Übergangstonerde $\gamma$ ist, und

bezogen auf das Gesamtgewicht des Katalysators,

0,01 bis 2 Gew.-% Silicium,

0,1 bis 15 Gew.-% von mindestens einem Halogen, ausgewählt aus der durch Fluor, Chlor, Brom und Iod gebildeten Gruppe,

0,01 bis 2 Gew.-% von mindestens einem Edelmetall aus der Platinfamilie, und

0,005 bis 10 Gew.-% von mindestens einem Promotormetall, ausgewählt aus der durch Zinn, Germanium, Indium, Gallium, Thallium, Antimon, Blei, Rhenium, Mangan, Chrom, Molybdän und Wolfram gebildeten Gruppe,

wobei der Katalysator einer ergänzenden hydrothermischen Behandlung bei einer Temperatur von 300 bis 1000°C in einer gasförmigen Atmosphäre, welche Wasserdampf enthält, unterzogen wurde, wobei der molare Wassergehalt der gasförmigen Atmosphäre mindestens 0,05 % beträgt.

2.  Katalysator nach Anspruch 1, worin die Matrix 3 bis 70 Gew.-% Übergangstonerde η umfasst.

3.  Katalysator nach einem der Ansprüche 1 bis 2, außerdem umfassend, bezogen auf das Gesamtgewicht des Katalysators, 0,001 bis 8 Gew.-% von mindestens einem dotierenden Metall, ausgewählt aus der Gruppe der Alkalimetalle und Erdalkalimetalle.

4.  Katalysator nach Anspruch 3, worin das dotierende Metall Kalium ist.

5.  Katalysator nach einem der Ansprüche 1 bis 2, außerdem umfassend, bezogen auf das Gesamtgewicht des Katalysators, 0,001 bis 10 Gew.-% von mindestens einem dotierenden Metall, ausgewählt aus der durch Titan, Zirconium, Hafnium, Cobalt, Nickel und Zink gebildeten Gruppe.

6.  Katalysator nach Anspruch 5, worin das dotierende Metall Zirconium ist.

7.  Katalysator nach einem der Ansprüche 1 bis 2, außerdem umfassend, bezogen auf das Gesamtgewicht des Katalysators, 0,001 bis 10 Gew.-% von mindestens einem dotierenden Metall, ausgewählt aus der Gruppe der Lanthanoiden.

8.  Katalysator nach Anspruch 7, worin das dotierende Metall Lanthan ist.

9.  Katalysator nach einem der Ansprüche 1 bis 8, worin der Siliciumgehalt 0,01 bis 1 Gew.-% beträgt.

10. Katalysator nach einem der Ansprüche 1 bis 8, worin der Halogengehalt 0,2 bis 10 Gew.-% beträgt.

11. Katalysator nach einem der Ansprüche 1 bis 8, worin der Gesamtedelmetallgehalt 0,1 bis 0,8 Gew.-% beträgt.

12. Katalysator nach einem der Ansprüche 1 bis 8, worin das Promotormetall ausgewählt ist aus der durch Zinn, Geranium, Indium, Antimon, Blei, Thallium, Gallium und ihren Mischungen gebildeten Gruppe.

13. Katalysator nach Anspruch 12, worin das Promotormetall Zinn ist.

14. Katalysator nach einem der Ansprüche 1 bis 8, worin das Promotormetall ausgewählt ist aus der durch Rhenium, Mangan, Chrom, Molybdän, Wolfram, Indium und Thallium gebildeten Gruppe.

15. Katalysator nach einem der Ansprüche 1 bis 8, worin das Halogen Chlor ist.

16. Katalysator nach einem der Ansprüche 1 bis 8, worin das Edelmetall Platin ist.

17. Verfahren zum Herstellen eines Katalysators nach einem der Ansprüche 1 bis 8, **dadurch gekennzeichnet, dass** es die folgenden Stufen umfasst:

    a) gegebenenfalls durch Mischen und anschließend durch Formgebung erfolgende Herstellung einer Matrix aus Übergangstonerde γ, aus Übergangstonerde η oder aus einer Mischung aus Übergangstonerde η und Übergangstonerde γ;

    b) Abscheidung der folgenden Bestandteile auf mindestens einer der Übergangstonerden γ und η in den nachstehend angegebenen Gew.-%-Anteilen, welche sich auf das Gesamtgewicht des Katalysators beziehen:

    0,01 bis 2 Gew.-% Silicium,

    0,1 bis 15 Gew.-% von mindestens einem Halogen, ausgewählt aus der durch Fluor, Chlor, Brom und Iod gebildeten Gruppe,

    0,01 bis 2 Gew.-% von mindestens einem Edelmetall aus der Platinfamilie,

    0,005 bis 10 Gew.-% von mindestens einem Promotormetall, ausgewählt aus der durch Zinn, Germanium, Indium, Gallium, Thallium, Antimon, Blei, Rhenium, Mangan, Chrom, Molybdän und Wolfram gebildeten Gruppe, und

gegebenenfalls 0,001 bis 10 Gew.-% von mindestens einem dotierenden Metall, ausgewählt aus der durch Alkalimetalle und Erdalkalimetalle, Lanthanoiden, Titan, Zirconium, Hafnium, Cobalt, Nickel und Zink gebildeten Gruppe,

wobei die Stufen a) und b) in beliebiger Reihenfolge ausgeführt werden können und die Abscheidungen der Stufe b) zum Teil erst vor der Stufe a) durchgeführt werden können und in beliebiger Reihenfolge ausgeführt werden können; und

c) ergänzende hydrothermische Behandlung des nach den Stufen a) und b) erhaltenen Katalysators bei einer Temperatur von 300 bis 1000°C in einer gasförmigen Atmosphäre, die Wasserdampf enthält, wobei der molare Wassergehalt der gasförmigen Atmosphäre mindestens 0,05 % beträgt.

**18.** Verfahren nach Anspruch 17, worin die Abscheidungen durch Imprägnierung ausgehend von mindestens einer Lösung, die mindestens eine Vorläuferverbindung eines abzuscheidenden Bestandteils enthält, gefolgt von einer Calcinierung bei einer Temperatur von 300° bis 900°C durchgeführt werden.

**19.** Verfahren nach einem der Ansprüche 17 und 18, **dadurch gekennzeichnet, dass** es die folgenden aufeinanderfolgenden Stufen umfasst:

a) Formgebung der Matrix aus Tonerde γ oder Tonerde η oder aus einer Mischung aus Tonerde γ oder Tonerde η,

b) Abscheidung von Silicium auf dieser Matrix,

c) gegebenenfalls Abscheidung von mindestens einem dotierenden Metall, und

d) gleichzeitige oder aufeinanderfolgende Abscheidung

von mindestens einem Promotormetall, ausgewählt aus Zinn, Germanium, Indium, Gallium, Thallium, Antimon, Blei, Rhenium, Mangan, Chrom, Molybdän und Wolfram,

von mindestens einem Element, ausgewählt aus der durch Fluor, Chlor, Brom und lod gebildeten Gruppe, und

von mindestens einem Edelmetall aus der Platinfamilie.

**20.** Verfahren nach Anspruch 17, **dadurch gekennzeichnet, dass** die ergänzende hydrothermische Behandlung während einer Dauer von 1 Minute bis 30 Stunden unter einer gasförmigen Atmosphäre erfolgt, deren molarer Wassergehalt 0,05 bis 100 % beträgt.

**21.** Verfahren nach Anspruch 20, worin der molare Wassergehalt 1 bis 50 % beträgt.

**22.** Verfahren nach einem der Ansprüche 20 und 21, worin die Dauer der hydrothermischen Behandlung 1 bis 10 Stunden beträgt.

**23.** Verfahren nach einem der Ansprüche 17 und 20 bis 22, **dadurch gekennzeichnet, dass** die gasförmige Atmosphäre außerdem mindestens ein Halogen umfasst.

**24.** Verfahren nach Anspruch 23, **dadurch gekennzeichnet, dass** der Halogengehalt der gasförmigen Atmosphäre bis zu 20 mol% betragen kann.

**25.** Verfahren nach Anspruch 23, **dadurch gekennzeichnet, dass** der Halogengehalt bis zu 10 mol% betragen kann.

**26.** Verfahren nach Anspruch 23, **dadurch gekennzeichnet, dass** der Halogengehalt bis zu 2 mol% betragen kann.

**27.** Verfahren nach einem der Ansprüche 17 und 20 bis 26, **dadurch gekennzeichnet, dass** die gasförmige Atmosphäre Luft, Sauerstoff, Argon oder Stickstoff ist.

**Claims**

**1.** A catalyst comprising :

- a matrix consisting of from 0 to 100 % by weight of $\eta$ transition alumina, the complement up to 100% by weight of the matrix being $\gamma$ transition alumina, and
- with respect to the total weight of catalyst,

    from 0.01 to 2% by weight of silicon
    from 0.1 to 15 % by weight of at least one halogen chosen from the group made up of fluorine, chlorine, bromine and iodine,

- from 0.01 to 2.00 % by weight of at least one noble metal from the platinum group, and
- from 0.005 to 10 % by weight of at least one promoter metal chosen from the group made up of tin, germanium, indium, gallium, thallium, antimony, lead, rhenium, manganese, chromium, molybdenum and tungsten, said catalyst having been subjected to a complementary hydrothermal treatment, at a temperature of 300 to 1000°C, in a gaseous atmosphere containing water vapour, the molar content of water in the gaseous atmosphere being at least 0.05%.

**2.** A catalyst according to Claim 1, in which the matrix comprises from 3.0 to 70 % by weight of $\eta$ transition alumina.

**3.** A catalyst according to any one of Claims 1 to 2, further comprising, from 0.001 to 8 % by weight, with respect to the total weight of the catalyst, of at least one doping metal chosen from the group of alkali and alkaline earth metals.

**4.** A catalyst according to Claim 3, in which the doping metal is potassium.

**5.** A catalyst according to any one of Claims 1 to 2, further comprising, from 0.001 to 10 % by weight, with respect to the total weight of the catalyst, of at least one doping metal chosen from the group made up of titanium, zirconium, hafnium, cobalt, nickel and zinc.

**6.** A catalyst according to Claim 5, in which the doping metal is zirconium.

**7.** A catalyst according to any one of Claims 1 to 2, further comprising, from 0.001 to 10 % by weight, with respect to the total weight of the catalyst, of at least one doping metal chosen from the group of lanthanide series.

**8.** A catalyst according to Claim 7, in which the doping metal is lanthanum.

**9.** A catalyst according to any one of Claims 1 to 8, in which the silicon content is from 0.01 to 1 % by weight.

**10.** A catalyst according to any one of Claims 1 to 8, in which the halogen content is from 0.2 to 10 % by weight.

**11.** A catalyst according to any one of Claims 1 to 8, in which the total content of noble metal is from 0.1 to 0.8 % by weight.

**12.** A catalyst according to any one of Claims 1 to 8, in which the promoter metal is chosen from the group made up of tin, germanium, indium, antimony, lead, thallium, gallium and their mixtures.

**13.** A catalyst according to Claim 12, in which the promoter metal is tin

**14.** A catalyst according to any one of Claims 1 to 8, in which the promoter metal is chosen from the group made up of rhenium, manganese, chromium, molybdenum, tungsten, indium and thallium.

**15.** A catalyst according to any one of Claims 1 to 8, in which the halogen is chlorine.

**16.** A catalyst according to any one of Claims 1 to 8, in which the noble metal is platinum.

**17.** A preparation process for a catalyst, according to any one of Claims 1 to 8, **characterized in that** it comprises the following stages :

a) preparation possibly by mixing then by forming of a matrix of γ transition alumina, η transition alumina or a mixture of η transition alumina and γ transition alumina ;
b) deposition of the following constituents on at least one of the η and γ transition aluminas, in the percentages by weight given below, which are relative to the total weight of the catalyst,

- from 0.01 to 2 % by weight of silicon,
- from 0.1 to 15 % by weight of at least one halogen chosen from the group made up of fluorine, chlorine, bromine and iodine,
- from 0.01 to 2 % of at least one noble metal from the platinum group,
- from 0.005 to 10 % by weight of at least one promoter metal chosen from the group made up of tin, germanium, indium, gallium, thallium, antimony, lead, rhenium, manganese, chromium, molybdenum and tungsten, and
- if required, from 0.001 to 10 % by weight of at least one doping metal chosen from the group made up of alkali and alkaline earth metals, lanthanide series, titanium, zirconium, hafnium, cobalt, nickel and zinc,

the stages a) and b) being able to be carried out in any order and the depositions of stage b) being able to be carried out only in part before stage a) and being able to be carried out in any order ; and
c) complementary hydrothermal treatment of the catalyst obtained after stages a) and b), at a temperature of from 300 to 1000°C, in a gaseous atmosphere containing water vapour, the molar content of water in the gaseous atmosphere being at least 0.05%.

**18.** A process according to Claim 17, in which the depositions are carried out by impregnation using at least one solution containing at least one precursor compound of a constituent to be deposited, followed by calcination at a temperature of from 300° to 900°C.

**19.** A process according to any one of Claims 17 and 18, **characterized in that** it comprises the following successive stages :

a) forming the matrix of γ alumina or η alumina or a mixture of γ alumina and η alumina.
b) deposition of silicon on this matrix.
c) possible deposition of at least one doping metal, and
d) simultaneous or successive deposition

- of at least one promoter metal chosen from tin, germanium, indium, gallium, thallium, antimony, lead, rhenium, manganese, chromium, molybdenum and tungsten,
- of at least one element chosen from the group made up of fluorine, chlorine, bromine and iodine, and
- of at least one noble metal from the platinum group.

**20.** A process according to Claim 17, **characterized in that** the complementary hydrothermal treatment is carried out for a period of 1 minute to 30 hours, under a gaseous atmosphere whose molar water content is from 0.05 to 100 %.

**21.** A process according to Claim 20, in which the molar content of water is from 1 to 50 %.

**22.** A process according to any one of Claims 20 and 21, in which the duration of the hydrothermal treatment is from 1 to 10 hours.

**23.** A process according to any one of Claims 17 and 20 to 22, **characterized in that** the gaseous atmosphere further comprises at least one halogen.

**24.** A process according to Claim 23, **characterized in that** the halogen content of the gaseous atmosphere may range up to 20 molar %.

**25.** A process according to Claim 23, **characterized in that** the halogen content may range up to 10 molar %.

26. A process according to Claim 23, **characterized in that** the halogen content may range up to 2 molar %.

27. A process according to any one of Claims 17 and 20 to 26, **characterized in that** the gaseous atmosphere is air, oxygen, argon or nitrogen.